# EUROPEAN PATENT APPLICATION

(11) **EP 4 046 696 A1**
(43) Date of publication of application: **24.08.2022**
(21) Application number: 20890635.4
(22) Date of filing: 17.11.2020
(51) Int. Cl.: A63B 69/00, A63B 60/46, A63B 102/16, H01M 50/20

(54) **SENSOR DEVICE AND SPORTS IMPLEMENT**

(30) Priority: 22.11.2019 JP 2019211470
(71) Applicant: Kyocera Corporation, Kyoto-shi Kyoto 612-8501 (JP)
(72) Inventor: SOEJIMA, Munetaka, Kyoto-shi, Kyoto 612-8501 (JP); TAKANAMI, Shun, Kyoto-shi, Kyoto 612-8501 (JP)
(74) Representative: TBK
(86) International application number: PCT/JP2020/042750
(87) International publication number: WO 2021/100688

(57) **Abstract**

A sensor device includes an inertial sensor and a holding member. The holding member holds the inertial sensor and is capable of being attached to and detached from an end face of a grip being part of a sports implement and having the shape of a shaft. The holding member includes a sensor-side coupling part. The sensor-side coupling part is capable of being attached to and detached from a grip-side coupling part on the end face of the grip by being moved relative to the grip in a first direction that forms an angle with an axial direction of the grip.

## Description

### Technical Field

The present disclosure relates to a sensor device for analyzing the motion of a sports implement and to a sports implement provided with the sensor device.

### Background Art

Known techniques related to sensors that can be attached to sports implements, such as rackets, to analyze the motion of the sports implements have been developed to improve the competence of players (see, for example, PTL 1). A sensor device capable of being attached to and detached from the grip of a racket is disclosed in PTL 1. The sensor device includes a sensor that can be attached to and detached from the grip by the insertion and withdrawal or the rotation of a base member having the sensor fixed thereto. More specifically, the base member can be fitted to and taken out of a fitting member on an end face of the grip in the axial direction of the grip, or the base member can be turned around the axis of the grip.

### Citation List

### Patent Literature

PTL 1: International Publication No. 2014/178154

### Summary of Invention

A sensor device according to an aspect of the present disclosure includes an inertial sensor and a holding member. The holding member holds the inertial sensor and is capable of being attached to and detached from an end face of a grip being part of a sports implement and having the shape of a shaft. The holding member includes a sensor-side coupling part. The sensor-side coupling part is capable of being attached to and detached from a grip-side coupling part on the end face of the grip by being moved relative to the grip in a first direction that forms an angle with an axial direction of the grip.

A sports implement according to another aspect of the present disclosure includes: a grip having the shape of a shaft; a grip-side coupling part on an end face of the grip; and the sensor device.

### Brief Description of Drawings

[Fig. 1] Fig. 1 is a perspective view of an analysis system according to a first embodiment, illustrating an example of the configuration of the analysis system designed for rackets.
[Fig. 2] Fig. 2 is a perspective view of an end face of a grip according to the first embodiment.
[Fig. 3] Fig. 3 is a perspective view of a sensor device according to the first embodiment, illustrating the sensor device viewed from the side on which the grip is located.
[Fig. 4] Fig. 4 is a perspective view of the sensor device in Fig. 3, illustrating the sensor device viewed from the side opposite to the side on which the grip is located.
[Fig. 5] Fig. 5 is a sectional view of the sensor device taken along line V-V in Fig. 4.
[Fig. 6] Fig. 6 is a block diagram illustrating the configuration of a signal processing part of the analysis system in Fig. 1.
[Fig. 7] Fig. 7 is a sectional view of a sensor device according to a modification of the first embodiment.
[Fig. 8] Fig. 8 is a perspective view of an end face of a grip according to a second embodiment.
[Fig. 9] Fig. 9 is a perspective view of a first component piece of a sensor device according to the second embodiment, illustrating the first component piece viewed from the side on which the grip is located.
[Fig. 10] Fig. 10 is a perspective view of the first component piece in Fig. 9, illustrating the first component piece viewed from the side opposite to the side on which the grip is located.
[Fig. 11] Fig. 11 is a perspective view of a second component piece of the sensor device according to the second embodiment, illustrating the second component piece viewed from the side on which the first component piece is located.
[Fig. 12] Fig. 12 is a sectional view of the first component piece taken along line XII-XII in Fig. 9.
[Fig. 13] Fig. 13 is a perspective view of an end face of a grip according to a third embodiment.
[Fig. 14] Fig. 14 is a perspective view of a sensor device according to the third embodiment, illustrating the sensor device viewed from the side on which the grip is located.
[Fig. 15] Fig. 15 is a sectional view of the sensor device taken along line XV-XV in Fig. 14.
[Fig. 16] Fig. 16 is a perspective view of an end face of a grip according to a modification.
[Fig. 17] Fig. 17 is a perspective view of a sensor device according to a modification, illustrating the sensor device viewed from the side on which the grip is located.

### Description of Embodiments

Hereinafter, embodiments of the present disclosure will be described with reference to the accompanying drawings. The drawings mentioned in the following description are schematic; that is, constituent elements are not drawn to scale, and the dimension ratios thereof do not necessarily fully correspond to the actual dimension ratios. The relative dimensions and the scale ratio may vary from drawing to drawing. Not every detail may be illustrated in the drawings or described below. For example, the term "rectangular" may be used to describe the shape of a member that has chamfered corners or edges having relatively smalls projections or recesses.

Embodiments that follow a first embodiment will be essentially described with a focus on their distinctive features only. Unless otherwise noted, these embodiments may be equated with the previously described embodiment or may be understood by analogy to the previously described embodiment. Each element in an embodiment and the corresponding element in another embodiment may be denoted by the same reference sign, irrespective of possible specific differences therebetween.

### First Embodiment

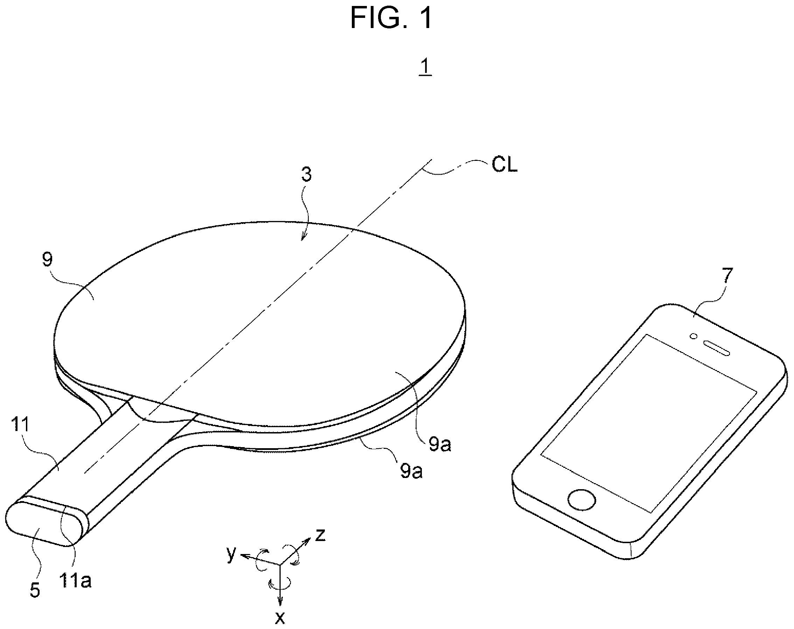

Fig. 1 is a perspective view of an analysis system 1 according to an embodiment, illustrating an example of the configuration of the analysis system 1.

The analysis system 1 includes mainly a sensor device 5 and an information processing device 7. The sensor device 5 is capable of being attached to and detached from a racket 3. The information processing device 7 processes information about physical quantities determined by the sensor device 5.

The sensor device 5 includes a sensor capable of determining physical quantities relevant to the motion of the racket 3. For example, the sensor device 5 includes at least one inertial sensor (an acceleration sensor and/or an angular velocity sensor) to determine the acceleration and/or the angular velocity of the racket 3. The information processing device 7 aids in storing, editing, and/or displaying the information about physical quantities determined by the sensor device 5.

The racket 3 may be deemed not to be part of the analysis system 1 or may be deemed to be part of the analysis system 1. For convenience, the racket 3 in the present embodiment is deemed not to be part of the analysis system 1. A combination of the racket 3 and the sensor device 5 may be regarded as a sensor-equipped racket.

### Racket

The racket 3 may be designed for various sports. A table tennis racket (also known as a paddle or a bat) will be described below as an example of the racket 3 in the present embodiment. Examples of the sports concerned include, besides table tennis, tennis (regular tennis and soft tennis), badminton, squash, and racquetball. As is clear from the fact that badminton is included in the examples mentioned above, the word "ball" is not herein used in a narrow sense and may be anything that is designed to be hit with a racket and is not necessarily spherical. For example, the ball may be a shuttlecock, which is not spherical in shape.

The racket 3 is mainly composed of a hitting part 9 (head) for hitting a ball and a grip 11, by which the racket 3 is held by the hand of a player.

The hitting part 9 includes hitting surfaces 9a for hitting a ball. The hitting surfaces 9a may be flat. In the illustrated example, the racket 3 includes a pair of hitting surfaces 9a (rubber sheets), with each hitting surface provided on the corresponding one of two opposite sides. Such a racket is typically designed for shake-hand grip. Alternatively, the racket 3 may include only one hitting surface 9a. Such a racket is typically designed for penholder grip. The hitting surfaces 9a of the racket 3 for table tennis may have projections and recesses. Tennis rackets each have a hitting surface that is a mesh of catgut. It is thus apparent that the word "flat" herein does not necessarily mean the flatness in a strict sense.

The grip 11 is a strip-shaped member that is thick enough to be held in the hand of a player. The hitting part 9 and the grip 11, which may be formed as one piece, are fixed to each other. Rackets for sports other than table tennis each may include a throat that is located between a grip and a hitting part to fix them together. The grip 11 may have a specific desired shape and specific desired dimensions, as required by the rules of the sport concerned and/or as dictated by common sense. For example, the grip 11 may be substantially elliptical (as in the illustrated example), circular, or polygonal (e.g., in the form of a regular polygon) when viewed in cross section. The cross-sectional area of the grip 11 may vary along its axis or may be constant.

CL denotes an imaginary line that extends parallel to each hitting surface 9a and passes through the center of each hitting surface 9a; that is, CL denotes an imaginary line that divides each hitting surface 9a into two substantially equal parts. The grip 11 is located outside the hitting surfaces 9a and extends along the imaginary line CL. The grip 11 extending along the imaginary line CL does not necessarily mean that the center line (not illustrated) of the grip 11 and the imaginary line CL coincide with each other or extend in parallel. The center line of the grip 11 and the imaginary line CL may form an angle or may extend in such a way as not to fit perfectly with each other, as required by the rules of the sport concerned and/or as dictated by common sense.

The racket 3 or, more specifically to the grip 11 may be designed to minimize extra processing required for attachment and detachment of the sensor device 5 and may be structurally identical or almost structurally identical to commonly used rackets that are not adapted to attachment and detachment of the sensor device 5. Alternatively, the racket 3 may be slightly different from commonly used rackets. Unlike the commonly used rackets, the racket 3 may undergo extra processing for weight reduction such that the racket 3 having the sensor device 5 attached thereto is as light as commonly used rackets that are not adapted to attachment and detachment of the sensor device 5.

The relative coordinate system xyz (sensor coordinate system) fixed to the racket 3 is illustrated in Fig. 1. Each axis of the coordinate system may extend in any desired direction. As for the present embodiment, the z-axis is parallel to the imaginary line CL or substantially parallel to the grip 11, the x-axis is orthogonal to the hitting surfaces 9a, and the y-axis is orthogonal to the x-axis and the z-axis. In other words, the y-axis is parallel to the hitting surfaces 9a and is orthogonal to the z-axis.

### Overview of Sensor Device

The sensor device 5 is capable of being attached to and detached from the grip 11. More specifically, the sensor device 5 is fitted on an end face 11a of the grip 11. The end face 11a is opposite the hitting part 9 with the grip 11 therebetween.

The sensor device 5 may have any desired shape and desired dimensions. In the illustrated example, the sensor device 5 is geometrically identical to the end face 11a of the grip 11 when viewed in the z direction. Alternatively, the sensor device 5 may be completely different from the end face 11a of the grip 11 when viewed in the z direction. In either case, the shape of the sensor device 5 viewed in the z direction may be understood as analogous to the shape of the grip 11 viewed in cross section. The sensor device 5 may be in the form of a right cylinder as in the illustrated example or in the form of a frustum or dome that decreases in diameter toward the -z side or may be a combination of these shapes. The area of the sensor device 5 viewed in the z direction may be less than or equal to the area of the end face 11a of the grip 11 or may be greater than the area of the end face 11a of the grip 11. The height of the sensor device 5 in the z direction may be less than the maximum diameter of the sensor device 5 in the xy-plane as in the illustrated example or may be greater than or equal to the maximum diameter of the sensor device 5 in the xy-plane.

The sensor device 5 in the illustrated example is geometrically identical or similar to the end face 11a of the grip 11 when viewed in the z direction. More specifically, the sensor device 5 is substantially elliptical. In other words, the sensor device 5 is shaped in such a manner that the dimension of the sensor device 5 in the longitudinal direction is greater than the dimension of the sensor device 5 in the short-side direction orthogonal to the longitudinal direction. In the illustrated example, the area of the sensor device 5 viewed in the z direction is substantially equal to the area of the end face 11a of the grip 11. For example, the area of the sensor device 5 or the end face 11a of the grip 11 viewed in the z direction except for the area of an overlap between the sensor device 5 and the end face 11a of the grip 11 is less than or equal to 40% of the total area of the end face 11a of the grip 11 viewed in the z direction or is less than or equal to 20% of the total area of the end face 11a of the grip 11 viewed in the z direction. In the case where the sensor device 5 conforms to the shape of the end face 11a of the grip 11, the sensor device 5 is less likely to interfere with the use of the racket 3, and a larger number of electronic components can be disposed inside the sensor device 5.

### Overview of Information Processing Device

The information processing device 7 includes a computer. The information processing device 7 in the illustrated example includes a smart device. For example, the smart device may be a smartphone as in the illustrated example or may be a tablet or a notebook computer but are not limited thereto. The hardware and the basic software such as the operating system (OS) of the computer may be analogous to various well-known hardware and software (i.e., commonly used hardware and software). A predetermined application may be installed on a commonly used computer to obtain the information processing device 7.

The information processing device 7 may perform a variety of processing tasks. For example, the information processing device 7 may acquire information about physical quantities determined by the sensor device 5 and may simply store the information in the form of time-series data. The information processing device 7 may also generate various kinds of information on the basis of the information about the physical quantities determined by the sensor device 5. For example, the information processing device 7 may provide information about the attitude of the racket 3, the swing speed of the racket 3, the impact timing (i.e., the timing of hitting a ball), and/or various kinds of information about impact. Various kinds of information about impact include mainly the attitude of the racket at the time of impact, the swing speed at the time of impact, and/or the impact point on the hitting surface 9a (i.e., the point at which a ball hits). The information processing device 7 may also perform processing for displaying the information about the physical quantities determined by the sensor device 5 or processing for displaying information obtained on the basis of the information about the physical quantities concerned.

### Structure for Attaching and Detaching Sensor Device

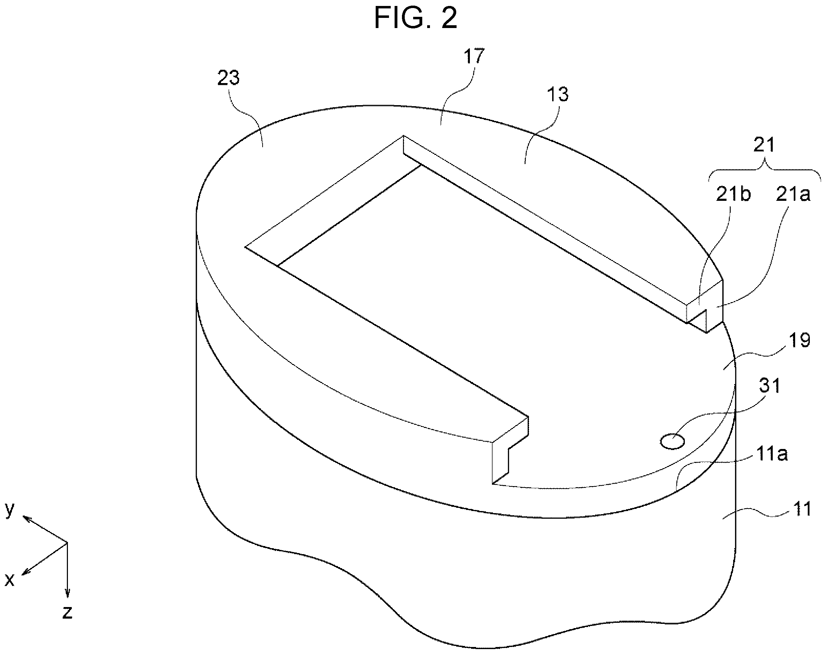

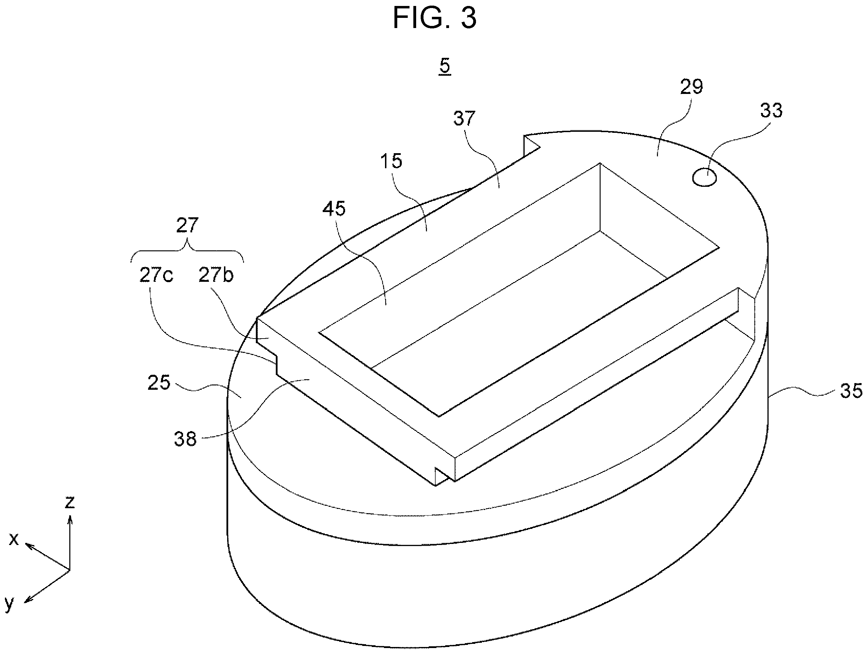

Fig. 2 is a perspective view of the grip 11, illustrating a state in which the grip 11 without the sensor device 5 attached thereto is viewed from the (-z) side on which a mounting place for the sensor device 5 is located. Fig. 3 is a perspective view of the sensor device 5, illustrating a state in which the sensor device 5 without the grip 11 attached thereto is viewed from the (+z) side on which the grip 11 is located. The positional relationship between the Cartesian coordinate system xyz in Fig. 2 and the grip 11 and the positional relationship between the Cartesian coordinate xyz in Fig. 3 and the sensor device 5 are analogous to those in Fig. 1. The same holds true for the other drawings, which will be described later; that is, the positional relationship between the Cartesian coordinate system xyz and each component is analogous to the positional relationship illustrated in Fig. 1.

The end face 11a of the grip 11 is provided with a grip-side coupling part 13. The sensor device 5 includes a sensor-side coupling part 15. The sensor device 5 is attached to the grip 11 in the following manner. First, the sensor device 5 is brought close to the end face 11a of the grip 11 and is placed on the -y side of the grip 11, with the +y side of the sensor device 5 facing the grip 11. The sensor device 5 is then moved parallel to the grip 11 in the y direction in a manner so as to shift toward the +y side. Part of the sensor-side coupling part 15 fits into part of the grip-side coupling part 13 on the +z side, and as a result, the sensor-side coupling part 15 is caught in the grip-side coupling part 13 in a manner so as to pull against the grip-side coupling part 13 toward the -z side. Conversely, the sensor device 5 is moved parallel to the grip 11 in the y direction in a manner so as to shift toward the -y side such that the sensor device 5 is detached from the grip 11. Consequently, the sensor-side coupling part 15 becomes disengaged from the grip-side coupling part 13.

That is, the sensor device 5 is attached to and detached from the grip 11 by being moved relative to the grip 11 in a direction (hereinafter also referred to as a first direction) orthogonal to the axial direction of the grip 11. The first direction in the illustrated example is the y direction. In other words, the first direction is the longitudinal direction of the end face 11a of the grip 11 and is parallel to the hitting surfaces 9a. Alternatively, the first direction may, for example, be the x direction. According to another perspective, the first direction may be orthogonal to the short-side direction of the end face 11a and/or to the hitting surfaces 9a as in a second embodiment, which will be described later.

The grip-side coupling part 13 may be obtained by attaching a desired member to the grip 11 or by processing the grip 11 or may be obtained by a combination of both. The grip-side coupling part 13 in the illustrated example is a grip-side member 17, which is capable of being attached to the grip 11. This is advantageous in that the racket 3 may be a regular racket; that is, such a regular racket can be fitted with the grip-side member 17 and can be fitted with the sensor device 5 accordingly.

The grip-side member 17 and the sensor device 5 may come in a set or individually. In the former case, a combination of the grip-side member 17 and the sensor device 5 may be regarded as a sensor device. In the case where the grip-side coupling part 13 is built right onto the racket 3, the racket 3 and the sensor device 5 may come in a set or individually. In the former case, a combination of the grip-side coupling part 13 and the sensor device 5 may be regarded as a sensor device. As mentioned above, a combination of the racket 3 and the sensor device 5 may be regarded as a sensor-equipped racket.

The grip-side coupling part 13 (or the grip-side member 17) may be an integral whole as in the illustrated example or may be composed of two or more members fixed together directly or with the grip 11 therebetween. The grip-side coupling part 13 (or the grip-side member 17) may be made of any desired material. For example, the grip-side coupling part 13 (or the grip-side member 17) may be made of an electrically conductive material or an insulating material or may be made of resin, metal, wood, or a combination of two or more of these. The grip-side coupling part 13 (or the grip-side member 17) may be partially or entirely fixed to the grip 11 by any desired means, such as screwing, engagement, bonding, or a combination of two or more of these.

The sensor-side coupling part 15 may be an integral whole as in the illustrated example or may be composed of two or more members. The sensor-side coupling part 15 may be made of any desired material. For example, the sensor-side coupling part 15 may be made of an electrically conductive material or an insulating material or may be made of resin, metal, wood, or a combination of two or more of these.

The grip-side coupling part 13 and the sensor-side coupling part 15 each may be in any specific desired form. The grip-side coupling part 13 and the sensor-side coupling part 15 in the illustrated example are as follows.

The grip-side coupling part 13 includes a basal portion 19, two rails (a pair of rails) 21, and a terminal end portion 23. The basal portion 19 is in the form of a plate and lies on the end face 11a of the grip 11. The rails 21 are located on a surface of the basal portion 19, with each rail 21 and the end face 11a being located on opposite side with the basal portion 19 therebetween. The rails 21 extend in the first direction (the y direction). The terminal end portion 23 is on the side on which one end of each rail 21 is located. The rail 21 are each substantially L-shaped when viewed in (xz) cross section. More specifically, the rails 21 each include a wall portion 21a and a protruding portion 21b. The wall portion 21a extends upward from the basal portion 19. The protruding portion 21b is located on an upper end of the wall portion 21a. The protruding portion 21b of one rail 21 and the protruding portion 21b of the other rail 21 protrude inward to face each other.

The sensor-side coupling part 15 includes a basal portion 25, two rails (a pair of rails) 27, and a terminal end portion 29. The basal portion 25 has a surface that is oriented toward the end face 11a of the grip 11 (+z side). The rails 27 are located on a surface of on the +z side of the basal portion 25 and extend in the first direction (the y direction). The terminal end portion 29 is on the side on which one end of each rail 27 is located. The rails 27 each include a wall surface 27c and a protruding portion 27b. The wall surface 27c extends upward from the basal portion 19. The wall surface 27c of one rail 27 and the wall surface 27c of the other rail 27 face in opposite directions. The protruding portion 27b is located on an upper end of the wall surface 27c. The protruding portion 27b of one rail 27 and the protruding portion 27b of the other rail 27 protrude to face in opposite directions.

When the sensor device 5 is moved relative to grip 11 toward the +y side in the manner described above, each protruding portion 27b of the sensor-side coupling part 15 is inserted between the basal portion 19 of the grip-side coupling part 13 and the corresponding protruding portion 21b. Meanwhile, each protruding portion 21b of the grip-side coupling part 13 is inserted between the basal portion 25 of the sensor-side coupling part 15 and the corresponding protruding portion 27b. With each protruding portion 27b and/or each protruding portion 21b being inserted as above, the sensor-side coupling part 15 is held in place in the z direction with respect the grip-side coupling part 13. The pair of rails 27 is sandwiched between the two rails 21 in the x direction. With the pair of rails 27 being sandwiched as above, the sensor-side coupling part 15 is held in place in the x direction with respect the grip-side coupling part 13. Unlike the rails in the illustrated example, rails may be provided in such a manner that a pair of rails of the grip-side coupling part 13 is sandwiched between two rails of the sensor-side coupling part 15.

The sensor device 5 is further moved relative to the grip 11 toward the +y side such that an end portion on the +y side of each rail 27 of the sensor-side coupling part 15 and the terminal end portion 23 of the grip-side coupling part 13 (or, more specifically, a portion on the inside of the pair of rails 21) come into contact with each other in the y direction. Meanwhile, an end portion on the -y side of each rail 21 of the grip-side coupling part 13 and the terminal end portion 29 of the sensor-side coupling part 15 or, more specifically, a portion on the outside of the pair of rails 27 come into contact with each other in the y direction. That is, the pair of rails 27 is in contact with the terminal end portion 23, and the pair of rails 21 is in contact with the terminal end portion 29. In this state, the sensor device 5 is kept from moving relative to the grip 11 toward the +y side. The pair of rails 27 may be in contact with the terminal end portion 23 without the pair of rails 21 being in contact with the terminal end portion 29, or the pair of rails 21 may be in contact with the terminal end portion 29 without the pair of rails 27 being in contact with the terminal end portion 23.

In the state in which the sensor device 5 is kept from moving relative to the grip 11 toward the +y side, that is, in the state in which the movement limit is reached, the movement of the sensor device 5 relative to the grip 11 toward the -y side may be restricted in any desired manner. For example, the distance between one rail 21 and the other rail 21 at the longitudinal end of the pair of rails may be less than the distance between an outer surface of one rail 27 and an outer surface of the other rail 27 in the x direction, in which case the movement is restricted due to the effect of increasing sliding resistance. The distance between the basal portion 19 and each protruding portion 21b at the longitudinal end of the pair of rails may be less than the thickness of each protruding portion 27b, in which case the movement is restricted due to the effect of increasing sliding resistance. The distance between the basal portion 25 and each protruding portion 27b at the longitudinal end of the pair of rails may be less than the thickness of each protruding portion 21b, in which case the movement is restricted due to the effect of increasing sliding resistance.

The grip-side coupling part 13 may include an engagement portion 31, and the sensor-side coupling part 15 may include an engagement target portion 33. When the movement limit for the sensor device 5 is reached, the engagement portion 31 and the engagement target portion 33 become engaged in the y direction. The engagement portion 31 and the engagement target portion 33 each may have any desired shape and each may be placed in any desired position. Furthermore, any desired number of engagement portions 31 and any desired number of engagement target portions 33 may be provided. In the illustrated example, the engagement portion 31 is a recess where the surface is recessed in a direction that forms an angle with the y direction or, more specifically, in the z direction, and the engagement target portion 33 is a projection that can get caught in the recess. Once the engagement portion 31 and the engagement target portion 33 become engaged, they will not become disengaged unless the grip-side coupling part 13 and/ or the sensor-side coupling part 15 is distorted. In this way, the movement in the y direction is restricted.

The engagement portion 31 of the grip-side coupling part 13 may be a member (not illustrated) that is movable relative to the grip 11. A spring for exerting force on the engagement portion 31 and/or a control element for manipulating the engagement portion may be provided. The engagement portion 31 and the engagement target portion 33 may become engaged or disengaged by exertion of force on the engagement portion and/or manipulation of the engagement portion.

In the state in which the movement limit for the sensor device 5 is reached, the rails 21, the rails 27, the terminal end portion 23, and the terminal end portion 29 may constitute a ring with no gap between one part and another part of the ring when viewed in the z direction. This will reduce the possibility that dust and/or moisture will get into interstices between the grip-side coupling part 13 and the sensor-side coupling part 15. A gasket (not illustrated) may be disposed between the grip-side coupling part 13 and the sensor-side coupling part 15 to make a tight seal between them. It is not always required that such a closed ring be formed.

The grip-side coupling part 13 and the sensor-side coupling part 15 may form any desired outer shape when the movement limit for the sensor device 5 is reached. According to another perspective, the rails and the terminal end portions may constitute a ring of any desired outer shape. The grip-side coupling part 13 and the sensor-side coupling part 15 in the illustrated example constitute an outer shape that is substantially in the form of a right cylinder with its axis extending in the z direction. The shape and dimensions of the right cylinder viewed in (xy) cross section may be understood as analogous to the aforementioned shape and dimensions of the sensor device 5 viewed in the z direction. In the illustrated example, the right cylinder and the end face 11a of the grip 11 have substantially the same shape and are substantially identical in dimensions when viewed in cross section.

### Internal Structure of Sensor Device

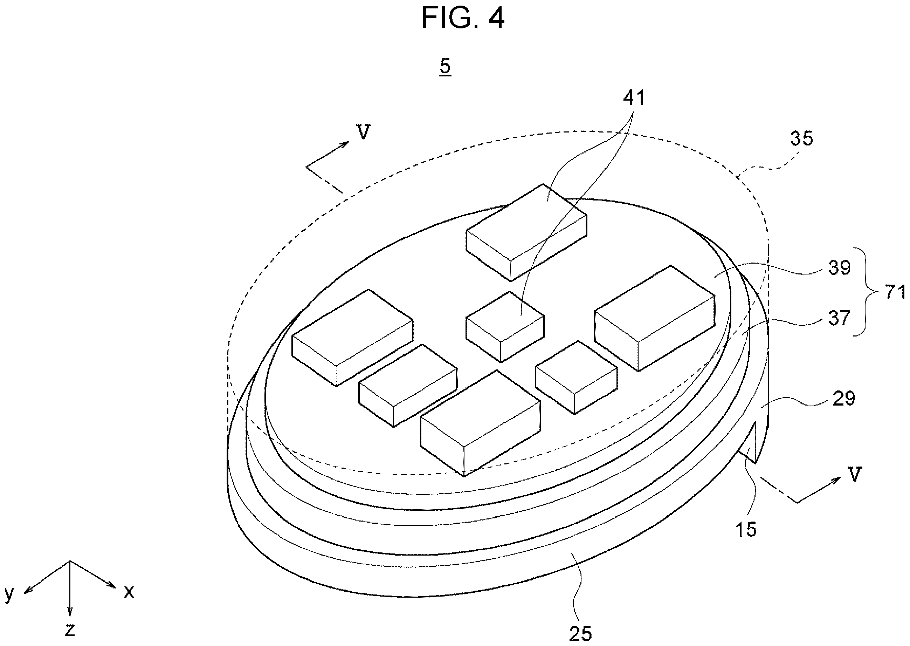

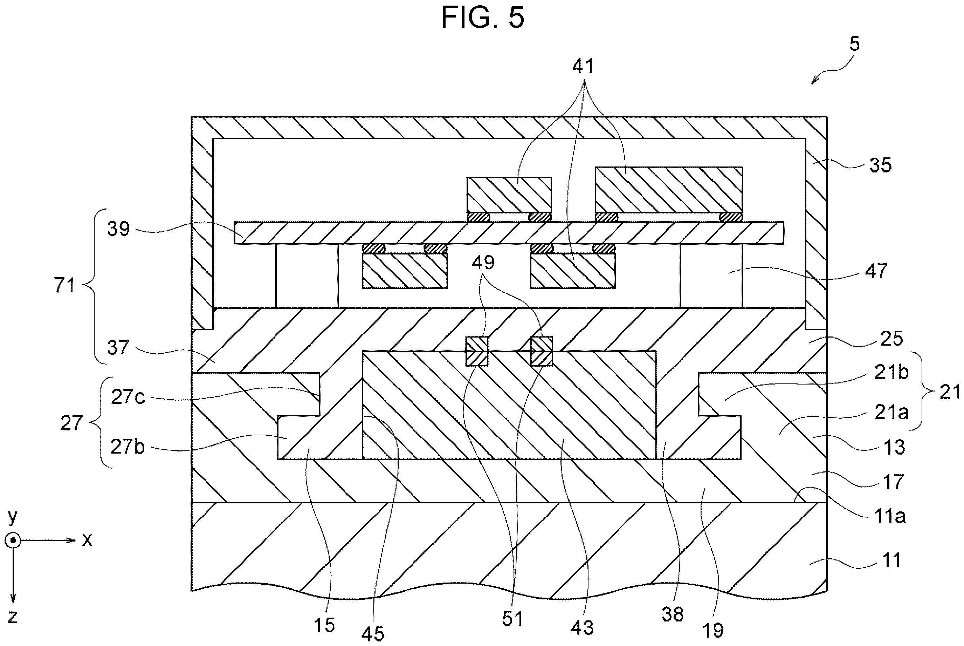

Fig. 4 is a perspective view of the sensor device 5, illustrating the sensor device 5 viewed from the -z side (i.e., a state in which the sensor device 5 in Fig. 3 is viewed from the reverse side). Fig. 4 illustrates the sensor device 5 part of which (a cover 35) is seen through. Fig. 5 is a schematic sectional view of the sensor device 5 taken along line V-V in Fig. 4.

The sensor device 5 includes mainly a holding base 37, a sensor substrate 39, electronic components 41, and a cover 35. The sensor-side coupling part 15 is included in the holding base 37. The sensor substrate 39 is joined to the holding base 37. The electronic components 41 are mounted on the sensor substrate 39 and are covered with the cover 35. The sensor device 5 also includes a battery 43 (see Fig. 5). The battery 43 supplies power to the sensor substrate 39 (or electronic components 41).

One or more of the electronic components 41 constitute a sensor. The part that holds the sensor and aids in the coupling to the grip 11 may be hereinafter referred to as a holding member 71. For example, the holding member 71 in the present embodiment includes the sensor substrate 39 and the holding base 37. The outer shape of the sensor device 5 is predominantly defined by the holding member 71, and the shape of the holding member 71 may thus be understood as analogous to the aforementioned shape of the sensor device 5.

The battery 43 in the present embodiment is capable of being attached to and detached from a constituent element of the sensor device 5. That is, it is not required that the sensor device 5 come incorporated with the battery 43. The sensor device 5 is thus definable without the battery 43. For convenience, the battery 43 in the present embodiment may be described as part of the sensor device 5 while in some places the battery 43 may be described as a member independent of the sensor device 5.

### Base

For example, the holding base 37 is a member whose main structural function is to hold the other constituent elements of the sensor device 5. The holding base 37 may be an integral whole as in the illustrated example or may be composed of two or more members. The holding base 37 may be made of any desired material. For example, the holding base 37 may be made of an electrically conductive material or may be made of an insulating material as in the illustrated example. The holding base 37 may be made of resin, metal, wood, or a combination of two or more of these.

The holding base 37 includes mainly the basal portion 25, the rails 27, and the terminal end portion 29, which have already been described above. The holding base 37 also includes a battery holder portion 45 (see Figs. 3 and 5) for holding the battery 43, as will be described later. As mentioned above, the basal portion 25 has a surface that is oriented toward the +z side (i.e., toward the end face 11a of the grip 11). The other surface of the basal portion 25 (the holding base 37) in the illustrated example is oriented toward the -z side and is a substantially flat surface orthogonal to the z direction. The outer shape of the holding base 37 viewed in the z direction may be understood as analogous to the aforementioned shape and dimensions of the sensor device 5 viewed in the z direction. In the illustrated example, the holding base 37 and the end face 11a of the grip 11 have substantially the same outer shape and are substantially identical in dimensions when viewed in the z direction.

### Sensor Substrate

For example, the sensor substrate 39 is a rigid printed wiring board. The sensor substrate 39 includes mainly an insulating substrate (not illustrated) and various kinds of conductors (not illustrated). Examples of the conductors include a conductor substantially parallel to the insulating substrate and a through conductor that extends through all or part of the insulating substrate. The substrate may be a well-known printed wiring board (e.g., a printed wiring board made of a well-known material), or the printed wiring board that can be used as the substrate may be implemented in various forms.

Both sides of the sensor substrate 39 in the illustrated example can be a mounting place for the electronic components 41. For example, the sensor substrate 39 in the illustrated example is a double-sided substrate having at least two conductor layers on both sides or is a multilayer substrate. Alternatively, the sensor substrate 39 may, for example, be a single-sided board, only one side of which can be a mounting place for the electronic components 41.

The sensor substrate 39 may have desired dimensions and any desired planar shape. The shape and dimensions of the sensor substrate 39 viewed in plan may be understood as analogous to the aforementioned shape and dimensions of the sensor device 5 viewed in z direction. In the present embodiment, the sensor substrate 39, which is accommodated in the cover 35, is slightly smaller than the outer shape of the sensor device 5 when viewed in the z direction. The sensor substrate 39 in the illustrated example conforms to the shape of the end face 11a of the grip 11 or, more specifically, is elliptical and is a size smaller than the end face 11a of the grip 11.

The sensor substrate 39 is located on the -z side with respect to the holding base 37 or, more specifically, with respect to the basal portion 25 (i.e., on the side opposite to the side on which the end face 11a of the grip 11 is located) and faces the basal portion 25 with a clearance therebetween. The electronic components 41 mounted on a surface of the sensor substrate 39 that is closer than the reverse surface of the sensor substrate 39 to the basal portion 25 are disposed in the clearance. The sensor substrate 39 is fixed to the holding base 37 and is joined to the grip 11 with the sensor-side coupling part 15 (included in the holding base 37) therebetween.

The sensor substrate 39 may be fixed to the holding base 37 by any desired means. For example, any desired number of spacers may be disposed to fasten the sensor substrate 39 to the basal portion 25. Referring to Fig. 5, two spacers 47 are disposed between the sensor substrate 39 and the basal portion 25. The spacers 47 may be part of the holding base 37; that is, the spacers 47 may be integral parts of the basal portion 25. The spacers 47 each have an internal thread (not illustrated). Screws (not illustrated) are inserted through the sensor substrate 39, and each screw fits into the internal thread of the corresponding spacer 47 such that the spacers 47 are fastened to the sensor substrate 39. Alternatively, each spacer 47 and the basal portion 25 may be separate members and may be fixed to each other. The spacers 47 are disposed not only to fasten the sensor substrate 39 to the basal portion 25 but also to create a clearance between the sensor substrate 39 and the basal portion 25. Instead of being fastened together by screwing, the sensor substrate 39 and the holding base 37 may be engaged or bonded together.

### Electronic Components

At least one of the electronic components 41 is a sensor for determining physical quantities relevant to the motion of the racket 3. The electronic components 41 each may be in the form of a chip that is surface-mounted on the sensor substrate 39 and is substantially in the shape of a rectangular parallelepiped, as in the illustrated example. Alternatively, through-hole mounting may be employed. The electronic components 41 each may have a shape other than a rectangular parallelepiped. Any desired number of electronic components 41 may be mounted and may be arranged as desired. The electronic components 41 each may have any desired size.

### Cover

The cover 35 protects mainly the sensor substrate 39 from external force, dust, moisture, and/or electromagnetic waves. The cover 35 may be an integral whole or may be composed of two or more members. The cover 35 may have any desired shape and desired dimensions and may be made of any desired material. The cover 35 may be attached in any desired manner.

For example, the cover 35 may be made of an electrically conductive material or an insulating material or may be made of resin, metal, wood, or a combination of two or more of these. The cover 35 in the illustrated example is made of a material that can be regarded as being rigid relative to elastic members. The cover 35 thus aids in protecting the sensor substrate 39 from external force. In a case where the sensor device 5 has a specific internal structure, the cover 35 may be an elastic member that can aid in protecting the sensor substrate 39 mainly from dust and/or moisture.

The cover 35 in the illustrated example is in the shape of a box whose top on the +z side is open. The cover 35 is placed on the surface on the -z side of the basal portion 25 in a manner so as to accommodate the sensor substrate 39. The cover 35 in the illustrated example accounts for substantially half the outer shape of the sensor device 5, with the half being on the -z side. The shape and dimensions of the cover 35 may be understood as analogous to the aforementioned shape and dimensions of the sensor device 5 viewed in the z direction.

The cover 35 in the illustrated example is fixed to the basal portion 25 (the holding base 37). The cover 35 may be fixed to the sensor substrate 39 only or to both the sensor substrate 39 and the holding base 37. The cover 35 may be fixed to another member by any desired means, such as screwing, engagement, or bonding.

### Battery

For example, the battery 43 is a secondary battery (a battery in a strict sense) that can be recharged and used many times. Alternatively, the battery 43 may be a disposable primary battery. The battery 43 may have any desired shape, desired dimensions, and any desired internal structure and may be a battery with desired voltage. The battery 43 in the illustrated example is thin in the z direction; that is, the dimension of the battery 43 in the z direction, which is the thickness direction, is less than the dimension in the x direction and is also less than the dimension in the y direction. More specifically, the battery 43 is substantially in the shape of a rectangular parallelepiped. In the illustrated example, the area of the battery 43 viewed in the z direction is relatively large and may, for example, be greater than or equal to one-third the area of the sensor substrate 39.

### Design for Installing and Removing Battery

The battery holder portion 45 for holding the battery 43 is located in the sensor device 5. For example, the battery holder portion 45 is a recess on the +z side of the holding base 37 (i.e., on the side on which the end face 11a of the grip 11 is located). The battery 43 can substantially fit in the recess and can be held by the holding base 37 accordingly. The recess or the portion in which the recess is defined may have any specific desired shape. The holding base 37 in the illustrated example includes a platform 38, which is raised higher than the basal portion 25 toward the +z side. The recess is provided in an upper surface of the platform 38. The dept of the recess may be greater than the height of the platform 38 as in the illustrated example or may be less than or equal to the height of the platform 38. Part of the platform 38 in the illustrated example can be regarded as the wall surfaces 27c of the rails 27.

In a state in which the sensor device 5 is attached to the grip 11, the battery 43 is on the holding base 37 on the side on which the end face 11a of the grip 11 is located. That is, the battery 43 may be held in a manner so as to be sandwiched between the grip-side member 17 (or, more specifically, the basal portion 19) and the battery holder portion 45. When seen from another perspective, the battery 43 in the state in which the sensor device 5 is attached to the grip 11 is located between the grip 11 and the sensor device 5 (and is hidden from view) such that the battery 43 is unremovable from the battery holder portion 45. In a state in which the sensor device 5 is detached from the grip 11, the battery 43 is exposed to view from outside the sensor device 5 and is removable from the battery holder portion 45. In the present embodiment, installation and removal of the battery 43 are correlated with attachment and detachment of the sensor device 5.

The battery 43 may be electrically connected to the sensor substrate 39 by any desired means. The battery holder portion 45 are provided with terminals 49, and the battery 43 includes terminals 51. Referring to Fig. 5, in a state in which the battery 43 is accommodated in the battery holder portion 45, the terminals 49 provided to the battery holder portion 45 are in contact with the terminals 51 of the battery 43. The terminals 49 are connected to the sensor substrate 39 with interconnections (not illustrated) therebetween. The battery 43 is electrically connected to the sensor substrate 39 accordingly. The terminals 49 and the terminals 51 each may be located in any desired position. Referring to Fig. 5, the terminals 49 (and the terminals 51) are located on a bottom surface of the recess that is the battery holder portion 45. Alternatively, these terminals may be located on any one of four side surfaces of the recess. The terminals each may be located in any desired position on the surface concerned. In a case where the sensor device 5 has a specific internal configuration (not illustrated), the terminals 51 of the battery 43 can be designed to come into contact terminals provided to the sensor substrate 39.

As the battery 43, a secondary battery may be removed or installed for replacement. For example, the sensor device 5 is powered by a secondary battery while another secondary battery is recharged. In this way, the sensor device 5 can be used continuously. As the battery 43, a primary battery may be removed or installed for replacement. The battery 43 in the present embodiment is designed to be removed from the battery holder portion 45 when needing a recharge. Alternatively, a recharge terminal separate from the terminals of the battery 43 may be provided to the sensor device 5 such that the battery 43 can be recharged via the terminal in the state in which the battery 43 is installed in the sensor device 5.

### Configuration of Signal Processing Part

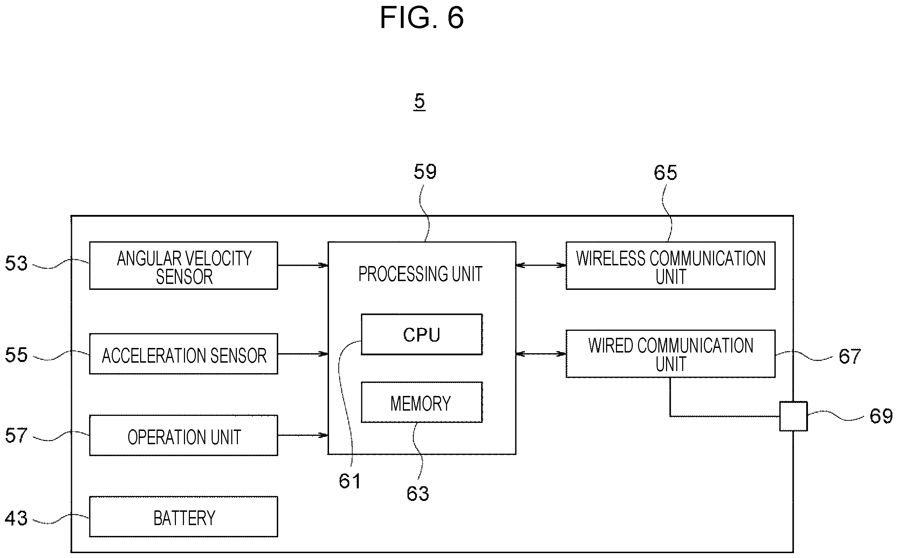

Fig. 6 is a block diagram illustrating the configuration of a signal processing part of the sensor device 5. Referring to Fig. 6, each arrow drawn from one block to another block indicates the direction in which a primary signal is transmitted; nevertheless, there may be a signal transmitted opposite to the direction of the arrow.

For example, the sensor device 5 includes sensors (denoted respectively by 53 and 55), a processing unit 59, and communication units (denoted respectively by 65, 67, and 69). The sensors (53 and 55) are configured to determine physical quantities relevant to the motion of the racket 3. The processing unit 59 is configured to process information about the determined physical quantities. The communication units (65, 67, and 69) are configured to communicate with an external device, such as the information processing device 7. The sensor device 5 also includes an operation unit 57, which accepts an operation performed by, for example, a user. These units are implemented by the sensor substrate 39 and the electronic components 41 mounted on the sensor substrate 39.

### Sensors

The sensors capable of determining physical quantities relevant to the motion of the racket 3 may be of various kinds. Referring to Fig. 6, examples of such a sensor include an angular velocity sensor (denoted by 53) and an acceleration sensor (denoted by 55). The angular velocity sensor 53 is a gyroscope sensor or a gyroscope and determines the angular velocity of the racket 3. The acceleration sensor 55 determines the acceleration of the racket 3. Examples of such a sensor also include a geomagnetic sensor. Each sensor may be one electronic component 41 or may be composed of two or more electronic components 41. Alternatively, two or more sensors may be implemented by one electronic component 41.

For example, the angular velocity sensor 53 is a triaxial angular velocity sensor capable of determining the angular velocity about the x-axis, the angular velocity about the y-axis, and the angular velocity about the z-axis (see arrows around the three axes in Fig. 1). Examples of such a triaxial angular velocity sensor include a combination of an angular velocity sensor (not illustrated) for determining the angular velocity around the x-axis, an angular velocity sensor (not illustrated) for determining the angular velocity around the y-axis, and an angular velocity sensor (not illustrated) for determining the angular velocity around the z-axis. Alternatively, the angular velocity sensor 53 may be a combination of three sensors each configured to determine the angular velocity around the corresponding axis of a coordinate system inclined relative to the relative coordinate system xyz. In this case, the angular velocity sensor 53 or an external device provided to the angular velocity sensor 53 may perform coordinate transformation to determine the angular velocity about the x-axis, the angular velocity about the y-axis, and the angular velocity about the z-axis.

The sensors that respectively determine the angular velocity about the x-axis, the angular velocity about the y-axis, and the angular velocity about the z-axis may be configurationally analogous to various well-known sensors. For example, the angular velocity sensor that determines the angular velocity around the z-axis according to US Patent Application Publication No. 2019/265033, which is hereinafter referred to as Prior Art Document 1 and corresponds to International Publication No. 2018/021166, may be used to determine the angular velocity around the z-axis defined above with reference to Fig. 1. The angular velocity sensor that determines the angular velocity around the y-axis according to Prior Art Document 1 may be used to determine the angular velocity around the y-axis defined above with reference to Fig. 1. The angular velocity sensor that determines the angular velocity around the y-axis according to Prior Art Document 1 may be used to determine the angular velocity around the x-axis defined above with reference to Fig. 1, in which case the angular velocity is disposed in such a manner that the y-axis according to Prior Art Document 1 coincides with the x-axis in Fig. 1 and the x-axis according to Prior Art Document 1 coincides with the y-axis in Fig. 1. Prior Art Document 1 may be herein incorporated by reference in its entirety.

The acceleration sensor 55 is a triaxial acceleration sensor capable of determining the acceleration along the x-axis, the acceleration along the y-axis, and the acceleration along the z-axis. The triaxial acceleration sensor may be configurationally analogous to various well-known sensors, such as a piezoresistive triaxial acceleration sensor disclosed in International Publication No. 2009/119840, which may be herein incorporated by reference in its entirety. Alternatively, the acceleration sensor 55 may be a capacitive triaxial acceleration sensor or a thermal triaxial acceleration sensor. Still alternatively, the acceleration sensor 55 may be a combination of one or more acceleration sensors that are appropriately configured to detect the acceleration along one axis or two axes. The acceleration sensor 55 is similar to the angular velocity sensor 53 in the following respect: the acceleration sensor 55 may determine firsthand the acceleration in directions that form angles with the x-axis, the y-axis, and the z-axis.

### Processing Unit

The processing unit 59 includes mainly a processor or, more specifically, a central processing unit (CPU) 61 and memory 63. The memory 63 includes mainly read-only memory (ROM), random-access memory (RAM), and an external storage device. The CPU 61 executes a predetermined program stored in the memory 63 (the ROM or the external device) to implement the processing unit 59. The processing unit 59 may be one electronic component 41 or may be composed of two or more electronic components 41. The processing unit 59 acquires information about the angular velocity determined by the angular velocity sensor 53 and information about the acceleration determined by the acceleration sensor 55 and then transmits the information by way of the communication unit (65 or 67).

### Communication Units

As the communication units, a wireless communication unit 65 and a wired communication unit 67 are included in the sensor device 5. The wireless communication unit 65 conducts wireless communication, and the wired communication unit 67 conducts wired communication. The sensor device 5 may include the wireless communication unit 65 or the wired communication unit 67 only. Each communication unit may be one electronic component 41 or may be composed of two or more electronic components 41. Alternatively, one electronic component 41 may implement the two communication units.

The wireless communication unit 65 is capable of conducting wireless communication to communicate at least with the information processing device 7. The wireless communication may be conducted to transmit information to the information processing device 7 or may be conducted to transmit information to the information processing device 7 and to receive information from the information processing device 7. The wireless communication may be conducted using radio waves or infrared radiation. Means for conducting the wireless communication include short-distance wireless communications such as Bluetooth (registered trademark) and Wi-Fi (registered trademark).

The wired communication unit 67 is capable of conducting wired communication to communicate at least with the information processing device 7. The wired communication may be conducted to transmit information to the information processing device 7 or may be conducted to transmit information to the information processing device 7 and to receive information from the information processing device 7. The wired communication may be conducted using an electric wire or an optical fiber. The wired communication unit 67 is electrically connected to a connector 69, which is included in the sensor device 5. A cable (not illustrated) connected to the information processing device 7 is connected to the connector 69 such that wired communication unit 67 is connected to the information processing device 7. Alternatively, the connector 69 may be connected directly to a connector of the information processing device 7.

The connector 69 may be configurationally analogous to various well-known connectors. As the connector 69 for electrical connection, a terminal (e.g., a pin, a tube, or a plate) made of metal may be placed in a housing made of resin. As the connector 69 for optical connection, an end portion of an optical fiber or an optical component optically connected to the end portion of the optical fiber may be placed in a housing made of resin. The housing may, for example, be part of the basal portion 25.

The connector 69 may be located in any desired position. For example, the connector 69 may be hidden from view by the grip 11 in a state in which the sensor device 5 is attached to the grip 11, and the connector 69 may be exposed to view in a state in which the sensor device 5 is detached from the grip 11. To that end, the connector 69 may be disposed on the surface on the +z side of the basal portion 25, on a side surface of the platform 38, an upper surface of the platform 38, or on an inner surface of the recess that is the battery holder portion 45. Alternatively, the connector 69 may be exposed to view from outside in the state in which the sensor device 5 is attached to the grip 11. In this case, the connector 69 may be fitted with a protective cap. The connector 69 may be oriented in any desired direction, wherever the connector 69 is situated.

### Operation Unit

The operation unit 57 makes or breaks a circuit and/or inputs a predetermined signal to the processing unit 59 in accordance with an operation performed by the user. For example, the user can perform an operation on the operation unit 57 to turn on or off the power to the sensor device 5, to start or end the sensing activity, to start or stop the transmission of acquired information, and/or to switch between different operation modes. For example, the operation unit 57 allows switching between a mode of operation in which information about determined physical quantities is transmitted (substantially) in real time during training or a game and a mode of operation in which information about physical quantities determined and stored during training or a game is transmitted after the training or the game. The operation unit 57 may also allow selection or switching among different kinds of physical quantities to be determined, switching among different sampling cycles (setting of a desired sampling cycle), and/or switching between wired communication and wireless communication.

The operation unit 57 may be configurationally analogous to various well-known operation units. For example, the operation unit 57 may include one or more switches and/or one or more potentiometers. Each switch may be a mechanical switch or an electrical switch and includes a sensor, such as a pressure-sensitive sensor or an electrostatic sensor. The operation unit 57 may, for example, be depressed, slid, or rotated to effect these operations.

The switch(es) of the operation unit 57 may be one or more electronic components 41 mounted on the sensor substrate 39. The switch(es) or an operation member for transmittal of the operation performed by the user to the switch(es) may be exposed to view from outside the sensor device 5. The portion designed to be exposed to accept the operation performed by the user may be hidden from view by the grip 11 or may be exposed to view in a state in which the sensor device 5 is attached to the grip 11.

### Positions of Electronic Components

The units of the signal processing part of the sensor device 5 are implemented by some of the electronic components 41. The electronic components 41 each may be placed in any desired position with respect to each other or with respect to another member (e.g., the sensor substrate 39 and the battery 43).

For example, the electronic component 41 serving as the wireless communication unit 65 may be disposed opposite the grip 11 with the sensor substrate 39 and/or the battery 43 therebetween. This layout provides ease of transmitting and receiving radio waves. The electronic component 41 serving as the switch(es) included in the operation unit 57 may, for example, be disposed opposite the grip 11 with the sensor substrate 39 and/or the battery 43 therebetween. This provides ease of designing the sensor device 5 in such a manner that the operation unit 57 is exposed to view from the outside in a state in which the sensor device 5 is attached to the grip 11.

The acceleration sensor 55 may, for example, be located on the center line of the grip 11. According to another perspective, the acceleration sensor 55 may be located at the center of the sensor substrate 39. This will make acceleration measurements less sensitive to the rotation of the grip 11 around its axis. It is not required that the angular velocity sensor 53 be located on the center line of the grip 11. The reason for this is that angular velocity measurements can be taken by the angular velocity sensor 53 located away from the center line of the grip 11 with relatively little loss of accuracy.

### Communication Modes

As mentioned above, information about physical quantities determined by the sensor device 5 may be transmitted (substantially) in real time during training or a game or may be transmitted after training or a game. In the former case, wireless communication may be employed. In the latter case, either wireless communication or wired communication may be employed. As a means of large-capacity, high speed data transmission, wired communication typically has an advantage over wireless communication.

The information processing device 7 may transmit, to the sensor device 5, information for updating the program stored in the memory 63 of the sensor device 5. In this case, either wireless communication or wired communication may be employed. As a means of large-capacity, high speed data transmission, wired communication typically has an advantage over wireless communication.

As mentioned above, the sensor device 5 in the present embodiment includes at least one inertial sensor (e.g., the angular velocity sensor 53 and/or the acceleration sensor 55) and the holding member 71. The inertial sensor (the electronic component 41) is held by the holding member 71, which is attached to and detached from the end face 11a of the grip 11 being part of the sporting implement (the racket 3) and having the shape of a shaft. The holding member 71 includes the sensor-side coupling part 15. The sensor-side coupling part 15 is moved relative to the grip 11 in the first direction (the y direction) that forms an angle with the axial direction of the grip 11 (the z direction) such that the sensor-side coupling part 15 is attached to and detached from the grip-side coupling part 13 on the end face 11a of the grip 11.

The possibility that the sensor device 5 will be misaligned about the z-axis with respect to the grip or will come off the grip 11 due to the rotation of the grip 11 around the z axis is lower than would be the case if the sensor device 5 is designed to be attached to the grip 11 by being inserted into the grip 11 in its axial direction (the z direction) and being turned around the z-axis. The sensor device 5 that is less prone to misalignment can detect the motion of the racket 3 more accurately. This effect is particularly advantageous in table tennis, in which the racket 3 is rotated about the axis of the grip 11 at high speed. Furthermore, the need to form a hole in the end face 11a of the grip 11 is lower than if the sensor device 5 is designed to be inserted into the grip 11 in its axial direction. This provides ease of reducing the amount of processing required to adapt a pre-existing (commonly used) racket to use as the racket 3.

When viewed in the axial direction of the grip 11 (the z direction), the holding member 71 (the sensor device 5 or the end face 11a of the grip 11) in the present embodiment is shaped in such a manner that the dimension in the longitudinal direction is greater than the dimension in the short-side direction orthogonal to the longitudinal direction. The first direction (in which the sensor-side coupling part 15 shifts so as to be attached to and detached from the grip-side coupling part 13) is the longitudinal direction.

The ease of ensuring that the rails 27 (and the rails 21) each have an adequate length is greater in this case than in an embodiment in which the first direction is the short-side direction. Such an embodiment is also included in the technique disclosed herein. The rails each having an adequate length provide added fixation force acting between the sensor device 5 and the grip 11. In some embodiments, the rails 27 are turned around the axis extending in the z direction. The longer the rails 27, the greater the radius of rotation of an end portion of each rail 27, and by extension, the smaller the ratio of the rotational angle to the extent to which the end portion of each rail 27 shifts in a direction that forms an angle with the rail 27. This suggests that the longer the rails 27, the less the machining error in the direction forming an angle with the rails 27 affects the position error of the sensor device 5 relative to the grip 11 around the axis extending in the z direction. The accuracy of placement of the sensor device 5 relative to the grip 11 is improved accordingly.

The sensor device 5 in the present embodiment also includes the wired communication unit 67, which is held by the holding member 71 and is configured to conduct wired communication to communicate with the outside.

The sensor device 5 is thus capable of large-capacity, high speed data transmission and/or reception. The sensor device 5 is capable of being attached to and detached from the grip 11. It is therefore easy to connect the connector 69 of the sensor device 5 directly to the connector of the information processing device 7 (with no cable between the sensor device 5 and the information processing device 7). With the sensor device 5 being capable of being attached to and detached from the grip 11, the connector 69 may be fitted in a part that is hidden from view by the grip 11.

The sensor device 5 in the present embodiment also includes the connector 69 for connection to the outside. The connector 69 is held by the holding member 71 and is connected to the wired communication unit 67. The holding member 71 may be designed as follows: the connector 69 is hidden from view by the holding member 71 in a state in which the sensor-side coupling part 15 is attached to the grip-side coupling part 13; and the connector 69 is exposed to view in a state in which the sensor-side coupling part 15 is detached from the grip-side coupling part 13.

In this case, attaching the connector 69 to the grip 11 is all that is required to hide the connector 69 from view. This provides a simplified safeguard against possible entry of foreign matter such as dust and/or moisture into the connector 69.

The sensor device 5 in the present embodiment also includes the wireless communication unit 65, which is held by the holding member 71 and is configured to conduct wireless communication to communicate with the outside.

As mentioned above, wired communication for large-capacity, high-speed data transmission and/or reception can be conducted. Furthermore, data can be transmitted and/or received in real time while the sensor device 5 attached to the racket 3 is in operation (e.g., during training or a game). This approach enables the user to select the suited communication mode in accordance with the intended use of the sensor device 5. Another advantage is that the sensor device 5 can readily achieve greater versatility.

The holding member 71 in the present embodiment is designed as follows: the battery 43 is hidden from view by the holding member 71 in a state in which the sensor-side coupling part 15 is attached to the grip-side coupling part 13; and the battery 43 is exposed to view in a state in which the sensor-side coupling part 15 is detached from the grip-side coupling part 13.

In this case, detaching the sensor device 5 from the grip 11 is all that is required to remove the battery 43 or to replace the battery 43 with another. When seen from another perspective, the aforementioned design is simpler than an embodiment that involves two discrete mechanisms: a mechanism by which the sensor device 5 is attached to and detached from the grip 11; and a mechanism by which the battery 43 is hidden from view and exposed to view (e.g., a mechanism by which a lid is attached or detached). Such an embodiment is also included in the technique disclosed herein.

The holding member 71 in the present embodiment includes the sensor substrate 39 and the holding base 37. The at least one inertial sensor is mounted on the sensor substrate 39. The holding base 37 is joined to the sensor substrate 39. The holding base 37 includes the battery holder portion 45 for holding the battery 43. In a state in which the holding member 71 is attached to the grip 11, the battery 43 held in the battery holder portion 45 is located between the holding base 37 and the end face 11a of the grip 11 (or, more specifically, the basal portion 19 of the grip-side coupling part 13) in a manner so as to be incapable of being removed or being replaced with another. In a state in which the holding member 71 is detached from the grip 11, the battery 43 held in the battery holder portion 45 is exposed to view such that the battery 43 is capable of being removed or replaced with another.

As mentioned above, the mechanism by which the sensor device 5 is attached to and detached from the grip 11 can double as the mechanism by which the battery 43 is hidden from view. The battery holder portion 45 and the sensor substrate 39 are of a one-piece design such that the terminals 49 for connection with the battery 43 can be wired directly to the sensor substrate 39 (with no terminal therebetween), or the terminals 51 of the battery 43 may be connected to the sensor substrate 39 in a manner so as to be in contact with terminals provided to the sensor substrate 39. This provides improved connection reliability in a power supply part.

### Modification

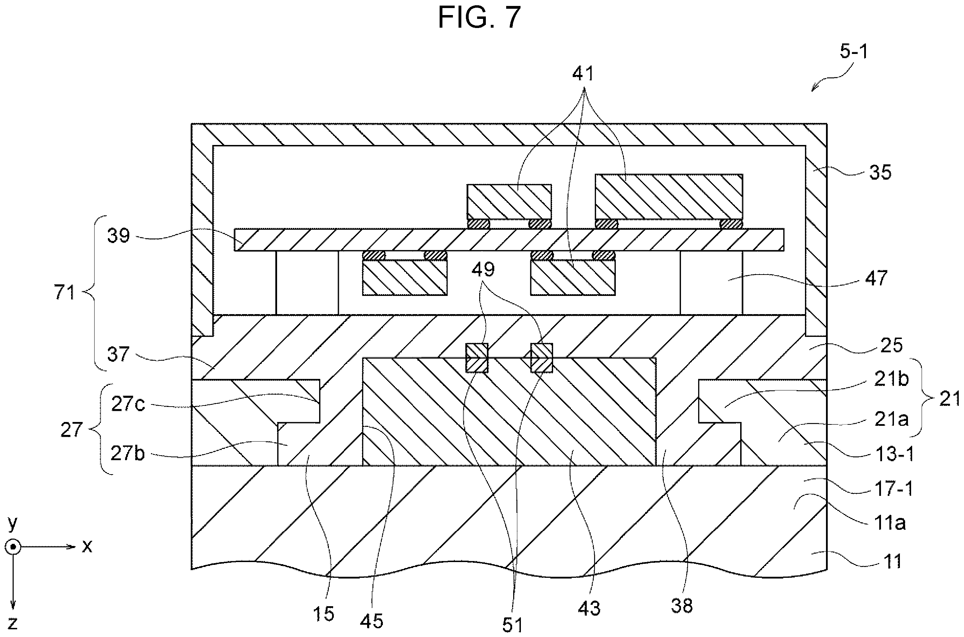

Fig. 7 is a sectional view analogous to Fig. 5, illustrating a sensor device 5-1 according to a modification of the first embodiment.

A grip-side coupling part 13-1 (or a grip-side member 17-1) in this modification does not include the basal portion 19 (see Fig. 5). In a state in which the grip-side coupling part 13-1 is coupled to the sensor-side coupling part 15, the battery 43 located between the holding member 71 and the grip 11 is in direct contact with the end face 11a of the grip 11.

The elimination of the basal portion 19 leads to a corresponding reduction in the height of the sensor device 5. Another advantage is that the sensor device 5 can achieve simplification through the efficient use of the end face 11a of the grip 11 as a member for holding the battery 43.

### Second Embodiment

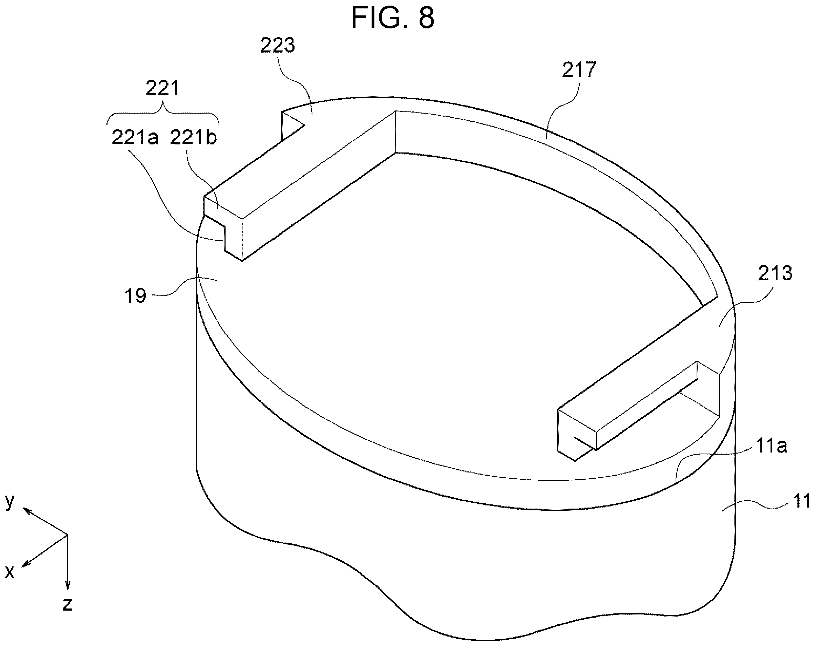

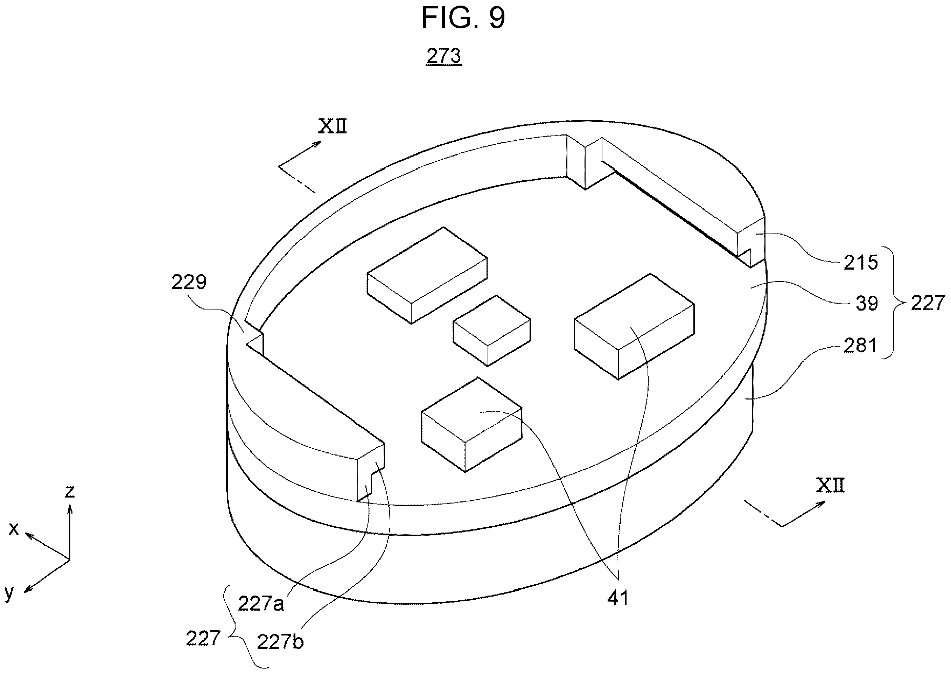

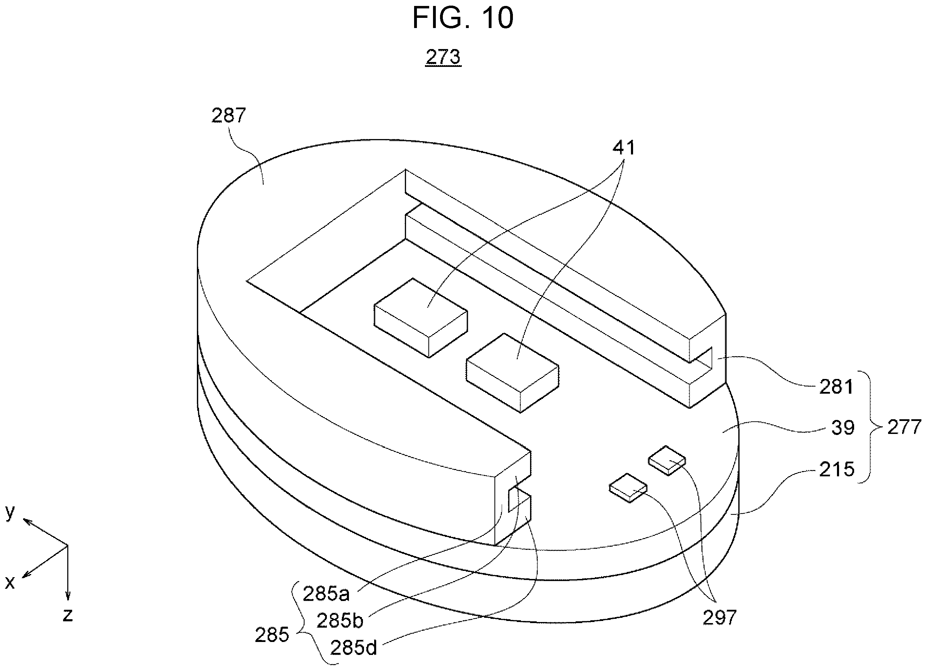

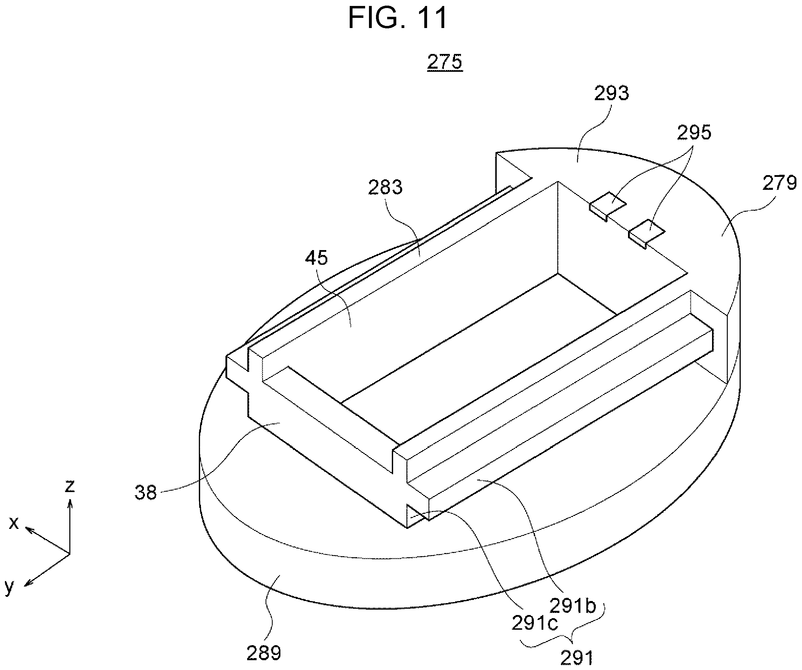

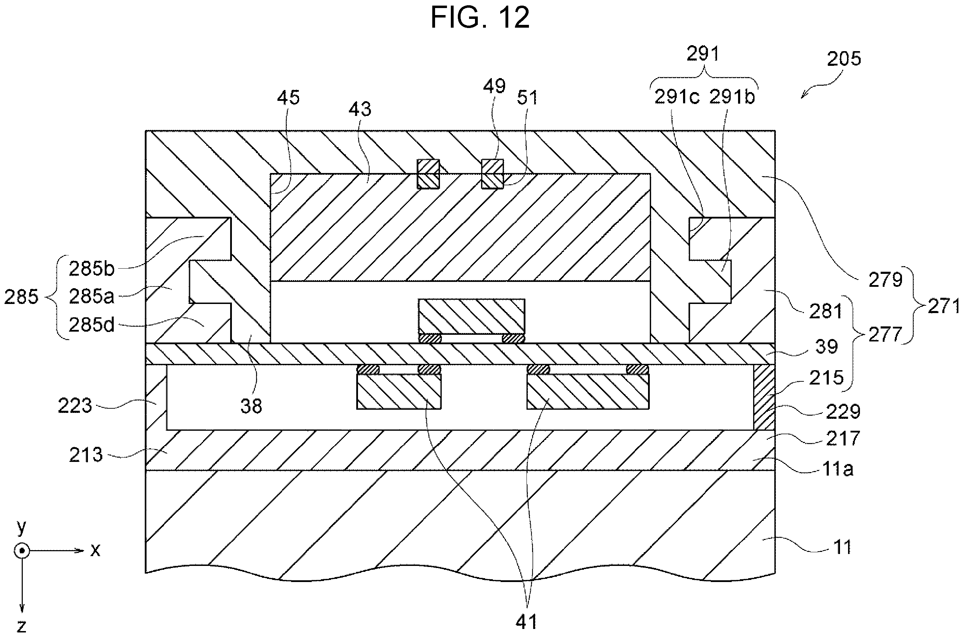

Fig. 8, which is analogous to Fig. 2 relevant to the first embodiment, is a perspective view of the grip 11 adapted to a sensor device (denoted by 205 in Fig. 12) according to a second embodiment, illustrating a state in which the grip 11 without the sensor device attached thereto is viewed from the (-z) side on which a mounting place for the sensor device 5 is located. Figs. 9 and 10 are perspective views of a first component piece 273, which is part of the sensor device 5 and is on the side on which the grip 11 is located. Fig. 9 illustrates the first component piece 273 viewed from the (+z) side on which the grip 11 is located. Fig. 10 illustrates the first component piece 273 viewed from the (-z) side opposite to the side on which the grip 11 is located. Fig. 11 is a perspective view of a second component piece 275, which is part of the sensor device 5 and is on the side opposite to the side on which the grip 11 is located. Fig. 11 illustrates a state in which the second component piece 275 is viewed from the (+z side) on which the first component piece 273 is located. Fig. 12 is a sectional view of the first component piece taken along line XII-XII in Fig. 9.

As can be understood from the above description of Figs. 9 to 11, the sensor device 205 according to the second embodiment differs from the sensor device according to the first embodiment in that the sensor device 205 includes: the first component piece 273 capable of being attached to and detached from the end face 11a of the grip 11; and the second component piece 275 capable of being attached to and detached from the first component piece 273. For example, the first component piece 273 includes the sensor substrate 39, and the second component piece 275 includes the battery holder portion 45. Thus, the battery 43 can be replaced together with the second component piece 275. In some embodiments (not illustrated), the first component piece 273 includes the battery holder portion 45, and the second component piece 275 includes the sensor substrate 39.

### Mechanism by Which First Component Piece Is Attached to and Detached from Grip

As illustrated in Figs. 8 and 9, the mechanism by which the first component piece 273 (or the sensor device 205) is attached to and detached from the grip 11 may be substantially analogous to the mechanism by which the sensor device 5 according to the first embodiment is attached to and detached from the grip 11. For example, a grip-side coupling part 213 (a grip-side member 217) is provided on the end face 11a of the grip 11. The first component piece 273 includes a sensor-side coupling part 215. The first component piece 273 and the grip 11 are moved relative to each other in a direction (the first direction) that forms an angle with the axial direction of the grip 11 such that these coupling parts are attached to each other or are detached from each other.

As mentioned above in relation to the first embodiment, the first direction, that is, the direction in which the sensor device 205 is moved relative to the grip 11 may be any direction that forms an angle with the axial direction of the grip 11. The illustrated example differs from the first embodiment in that the sensor device 205 is moved in the x direction. When seen from another perspective, the sensor device 205 is moved in the short-side direction of the sensor device 205 (the end face 11a) viewed in the z direction.

The specific design for attachment and detachment through the relative movement in the direction that forms an angle with the axial direction of the grip 11 may be analogous to the corresponding design in the first embodiment. The grip-side coupling part 213 includes the basal portion 19, a pair of rails 221, and a terminal end portion 223. The rails 221 extend in parallel on the basal portion 19. The terminal end portion 223 is on the side on which one end of each rail 221 is located. The rails 221 each include a wall portion 221a and a protruding portion 221b. The wall portion 221a extends upward from the basal portion 19. The protruding portion 221b protrudes from the wall portion 221a. The sensor-side coupling part 215 includes a pair of rails 227 and a terminal end portion 229. The rails 227 extend in parallel on the sensor substrate 39. The terminal end portion 229 is on the side on which one end of each rail 227 is located. The rails 227 each include a wall portion 227a and a protruding portion 227b. The wall portion 227a extends upward from the sensor substrate 39. The protruding portion 227b protrudes from the wall portion 227a. Each of the rails 221 and the corresponding one of the rails 227 become engaged or disengaged such that the grip-side coupling part 213 and the sensor-side coupling part 215 are attached to each other or detached from each other.

As mentioned above in relation to the first embodiment, the pair of rails 221 of the grip-side coupling part 213 may be located on the inner side with respect to the pair of rails 227 of the sensor-side coupling part 215, or the pair of rails 227 of the sensor-side coupling part 215 may be located on the inner side with respect to the pair of rails 221 of the grip-side coupling part 213. The illustrated example differs from the first embodiment in that the pair of rails 221 is located between the two rails 227. When seen from another perspective, each protruding portion of one coupling part (i.e., each protruding portion 221b of the grip-side coupling part 213 or each protruding part 227b of the sensor-side coupling part 215) in the illustrated example and each protruding portion of the corresponding coupling part in the first embodiment protrude in opposite directions (inward and outward with respect to the pair of rails concerned), and the same holds true for each protruding portion of the other coupling part in the illustrated example and each protruding portion of the corresponding coupling part in the first embodiment. One terminal end portion (the terminal end portion 223 or 229) or, more specifically, the portion that comes into contact with the pair of rails fixed to the other terminal end portion may be located either on the inner side or the outer side with respect to the pair of rails fixed to the portion concerned. This positional relationship between the portion concerned and the pair of rails fixed to the portion concerned is the reverse of the corresponding positional relationship in the first embodiment.

As in the first embodiment, the engagement portion 31 and the engagement target portion 33 (not illustrated) each may be provided in any desired part. As in the modification of the first embodiment, the basal portion 19 may be eliminated. The illustrated example differs from the first embodiment in that the member including the sensor-side coupling part 215 is fixed directly to the sensor substrate 39 without the basal portion 25 and the spacers 47 disposed between the member and the sensor substrate 39. Alternatively, the member may include the basal portion 25 and the spacers 47 as in the first embodiment. The sensor-side coupling part 215 may be fixed to the sensor substrate 39 by any desired means, such as screwing, engagement, or bonding.

In a state in which the movement limit for the sensor device 205 is reached, the rails 221, the rails 227, the terminal end portion 223, and the terminal end portion 229 may constitute a ring with no gap between one part and another part of the ring when viewed in the z direction, as in the first embodiment. In the present embodiment, the ring with no gap between one part and another part of it defines an enclosed space between the basal portion 19 (or the end face 11a) and the sensor substrate 39. The electronic components 41 are disposed in the space. A gasket (not illustrated) may be disposed to make a tight seal, as mentioned above in relation to the first embodiment.

### Mechanism by Which Second Component Piece Is Attached to and Detached from First Component Piece

The second component piece 275 is capable of being attached to and detached from the first component piece 273, where the attachment and detachment of the second component piece 275 is relatively easy. For example, the second component piece 275 is attached to and detached from the first component piece 273 in much the same way as the first component piece 273 is attached to and detached from the grip 11; that is, the second component piece 275 is moved relative to the first component piece 273. Alternatively, a catch may be provided, in which case the second component piece 275 becomes removable or unremovable from the first component piece 273 when the user fastens or unfasten the catch with his or her hand. Still alternatively, the second component piece 275 may be covered with a lid, which is removably engaged with the first component piece 273. The attachment and detachment of the second component piece 275 herein do not involve the use of a screw independent of the first component piece 273 and the second component piece 275.

The second component piece 275 may be moved relative to the first component piece 273 in various manners so as to be attached to and detached from the first component piece 273. For example, the second component piece 275 may be attached to and detached from the first component piece 273 in much the same way as the first component piece 273 is attached to and detached from the grip 11; that is, the first component piece 273 and the second component piece 275 may be moved relative to each other in a direction that forms an angle with the grip 11. Alternatively, the first component piece 273 and the second component piece 275 may have a hole and a projection, respectively, in which case the projection of the second component piece 275 is inserted into the hole of the first component piece 273. The opening defined by the hole is on either side in the z direction. The projection may be kept from slipping out of the hole by any desired means, such as friction. The hole and the projection may have an engagement portion and an engagement target portion, respectively, in which case the projection inserted into the hole may be turned about its axis such that the engagement portion of the hole and the engagement target portion of the projection become engaged in the direction in which the projection is inserted. The projection with an external screw thread may fit into the hole with an internal screw thread. The converse of the above is possible where the first component piece 273 and the second component piece 275 may have a projection and a hole, respectively.

As illustrated in Figs. 10 to 12, the design adopted in the present embodiment to attach the second component piece 275 to the first component piece 273 and to detach the second component piece 275 from the first component piece 273 is analogous to the design adopted to attach the first component piece 273 to the grip 11 and to detach the first component piece 273 from the grip 11. This will be described below in more detail.

The first component piece 273 includes a first coupling part 281. The first coupling part 281 includes a pair of rails 285 and a terminal end portion 287. The rails 285 extend in parallel on the sensor substrate 39. The terminal end portion 229 is on the side on which one end of each rail 285 is located. The rails 285 each include a wall portion 285a, a protruding portion 285b, and a supporting portion 285d. The wall portion 285a extends upward from the sensor substrate 39. The protruding portion 285b protrudes from an upper end of the wall portion 285a. The supporting portion 285d protrudes from a lower end of the wall portion 285a. The supporting portion 285d is optional.

The second component piece 275 includes a second coupling part 283. The second coupling part 283 includes a basal portion 289, a pair of rails 291, and a terminal end portion 293. The basal portion 289 is in the form of a flat plate. The rails 291 extend in parallel on the basal portion 289. The terminal end portion 293 is on the side on which one end of each rail 291 is located. The rails 291 each include a wall surface 291c and a protruding portion 291b. The wall surface 291c extends upward from the basal portion 289. The protruding portion 291b protrudes from a region between two edges opposite in the height direction of the wall surface 291c.

The pair of rails 285 and the pair of rails 291 are slid over each other in the longitudinal direction of these rails such that the first coupling part 281 and the second coupling part 283 are coupled or uncoupled from each other. The second component piece 275 is attached to or detached from the first component piece 273 accordingly.

The positional relationship between the pair of rails 285 and the pair of rails 291 is similar to the positional relationship mentioned above in relation to the rails of the grip-side coupling part 213 and the rails of the sensor-side coupling part 215; that is, the pair of rails 285 may be located on the inner side with respect to the pair of rails 291, or the pair of rails 291 may be located on the inner side with respect to the pair of rails 285. In the illustrated example, the pair of rails 291 is located between the two rails 285. The pair of rails 291 may be kept from being pulled out of the pair of rails 285 by any desired means as in the case with the grip-side coupling part 213 and the sensor-side coupling part 215.

### Direction of Movement of Coupling Parts

As with the first direction, that is, the direction of movement by which the sensor device 205 (the first component piece 273) is attached to or detached from the grip 11, the direction of movement by which the second component piece 275 is attached to or detached from the first component piece 273 may be any desired direction. In the present embodiment, the direction forms an angle with the axial direction of the grip 11. The direction concerned is hereinafter also referred to as a second direction. The second direction in the illustrated example is the y direction. In some embodiments, the second direction is the x direction or any other direction.

The first direction, that is, the direction of movement by which the first component piece 273 is attached to or detached from the grip 11 may be different from the second direction, that is, the direction of movement by which the second component piece 275 is attached to or detached from the first component piece 273. This feature offers the following advantage: the detachment of the second component piece 275 from the first component piece 273 is less likely cause an accidental detachment of the first component piece 273 from the grip 11, and/or the detachment of the first component piece 273 from the grip 11 is less likely to cause an accidental detachment of the second component piece 275 from the first component piece 273.

The second direction in the illustrated example forms an angle with the grip 11 and also forms an angle with the first direction. As mentioned above, the projection may be inserted into the hole and may be withdrawn from the hole, in which case the second direction is the direction of insertion and withdrawal, that is, the axial direction of the grip 11. The second direction may be the direction in which the projection inserted into the hole is turned to fit into the hole or the direction in which the external thread fits into the internal screw thread; that is, the second direction may be the direction around the axis of the grip 11. The axial direction and the direction around the axis are examples of the second direction different from the first direction.

Alternatively, the second direction may coincide with the first direction. In this case, the direction in which the first component piece 273 is attached to the grip 11 may be opposite to the direction in which the second component piece 275 is attached to the first component piece 273, and the direction in which the first component piece 273 is detached from the grip 11 may be opposite to the direction in which the second component piece 275 is detached from the first component piece 273. For example, the first component piece 273 is attached to the grip 11 by being moved relative to the grip 11 toward the +y side, whereas the second component piece 275 is attached to the first component piece 273 by being moved relative the first component piece 273 toward the -y side. This feature produces effects equivalent to those produced in the aforementioned case in which the first direction and the second direction are mutually different.

The specific designs that have been described above with reference to the accompanying drawings are applicable to the aforementioned case involving two types of attaching and detaching, where the direction of the movement for one type of attaching and detaching coincides with and is opposite to the direction of the movement for the other type of attaching and detaching. For example, the design for attaching the first component piece 273 to the grip 11 by moving the first component piece 273 relative to the grip 11 toward the +y side may be analogous to the design adopted in the first embodiment or, more specifically, to the design of the grip-side coupling part 13 illustrated in Fig. 2 and the design of the sensor-side coupling part 15 illustrated in Fig. 3. The first coupling part 281 illustrated in Fig. 10 and the second coupling part 283 illustrated in Fig. 11 each may be reversed in the y direction, in which case the second component piece 275 can be attached to the first component piece 273 by being moved relative to the first component piece 273 toward the -y side.

### Holding Member

As in the previous embodiment, a member that holds at least one inertial sensor (the electronic component 41) and is designed to be attached to and detached from the grip 11 is regarded as a holding member. The holding member in the present embodiment is denoted by 271 in Fig. 12. The holding member 271 includes a first base 277 and a second base 279. The first base 277 is part of the first component piece 273, and the second base 279 is part of the second component piece 275. The first base 277 includes, for example, the sensor substrate 39, the sensor-side coupling part 215, and the first coupling part 281. The second base 279 includes, for example, the second coupling part 283. In other words, the holding member 271 includes: the first base 277 designed to be attached to and detached from the grip 11; and the second base 279 capable of being attached to and detached from the first base 277.

### Design for Holding and Connecting Battery

One of the first base 277 and the second base 279 includes the battery holder portion 45. As mentioned above, the battery holder portion 45 (see Figs. 11 and 12) in the present embodiment is included in the second base 279. The battery holder portion 45 may be in any desired from. As in the first embodiment, the battery holder portion 45 in the illustrated example is a recess in the platform 38, where the platform 38 extends upward from the basal portion 289 of the second base 279.

The opening defined by the recess in the second base 279 is on the side on which the sensor substrate 39 is located. The opening is closed with the sensor substrate 39. Alternatively, the opening defined by the recess in the second base 279 may be opposite the side on which the sensor substrate 39 is located. The opening may be closed with a lid (not illustrated). As mentioned above, the battery holder portion 45 may be included in the first base 277. As in the first embodiment, the battery holder portion 45 in the first base 277 may be a recess on the side on which the grip 11 is located. In this case, the opening defined by the recess may be closed with the end face 11a of the grip 11 or the grip-side member 217. Alternatively, the battery holder portion 45 in the first base 277 may be on the side on which the second base 279 is located. In this case, the opening defined by the recess may be closed with the second base 279.

As in the first embodiment, side surfaces of the platform 38 in the illustrated example are also regarded as the wall surfaces 291c of the rails 291. As illustrated in Fig. 12, the thickness of the battery 43 is less than the depth of the recess that is the battery holder portion 45. Thus, the battery 43 faces the electronic component 41 with a clearance therebetween.

In the present embodiment, the battery 43 is designed to be removed together with the second base 279 (or the first base 277). For example, the battery 43 is recharged in such a manner that power is supplied to terminals 295 (see Fig. 11) provided to the second base 279 (or the first base 277). Interconnections (not illustrated) form an electrical connection between each terminal 295 and each terminal 49 (see Fig. 12) connectable to the corresponding terminal 51 of the battery 43. The battery 43 may be recharged without being attached to the second base 279 (or the first base 277) or may be recharged in such a manner that power is supplied directly to the terminals of the battery 43.

As mentioned above, the terminals 51 each may be provided in any desired part of the battery 43, and the terminals 49 each may be provided in any desired part of the sensor device 205. The terminals 295 each may be located in any desired position. For example, the terminals 295 may be located in a region that is hidden from view by the first base 277 and the second base 279 when the second base 279 is attached to the first base 277, or the terminals 295 be located in a region that is not hidden from view when the second base 279 is attached to the first base 277. In another embodiment in which the battery holder portion 45 is included in the first base 277, the terminals 295 may be located in a region that is hidden from view by the grip 11 when the first base 277 is attached to the grip 11, or the terminals 295 may be located in a region that is not hidden from view when the first base 277 is attached to the grip 11.

The terminals 295 for recharging the battery 43 may also be used to form an electrical connection between the battery 43 and the sensor substrate 39. In a state in which the second base 279 is attached to the first base 277, the terminals 295 in the illustrated example are in contact with terminals 297, which are provided to the sensor substrate 39 (see Fig. 10). In this state, the battery 43 can supply power to the electronic component 41 (e.g., an inertial sensor). Besides the terminals 295 for recharging the battery, terminals for connection with the terminals 297 may be provided to the base including the battery holder portion 45. In the illustrated example, the terminals may be provided to the second base 279. Alternatively, the terminals 51 of the battery 43 may be connected directly to terminals provided to the sensor substrate 39 (or to the base including the sensor substrate 39). The terminals 297 each may be provided in any desired part of the base including the sensor substrate 39. In the present embodiment, the terminals 297 each may be provided in any desired part of the first base 277.

The layout position of the connector 69 for wired communication may be understood as analogous to the relevant description of the first embodiment. Unlike the connector 69 in the first embodiment, the connector 69 in the present embodiment may be disposed in such a manner that the connector 69 is the hidden from view when the second base 279 is attached to the first base 277; conversely the connector 69 is exposed to view when the second base 279 is detached from the first base 277. To that end, the connector 69 may be provided to a surface on the -z side of the sensor substrate 39 so as to face the second base 279.

As mentioned above, the sensor-side coupling part 215 in the present embodiment is included in the holding member 271, which holds at least one inertial sensor (the angular velocity sensor 53 and/or the acceleration sensor 55). The sensor-side coupling part 215 is moved relative to the grip 11 in the first direction (the x direction) that forms an angle with the axial direction of the grip 11 such that the sensor-side coupling part 215 is attached to and detached from the grip-side coupling part 213 on the end face 11a of the grip 11. This feature produces effects equivalent to those produced in the first embodiment. For example, this feature reduces the possibility that the sensor device 205 will be misaligned with respect to the grip 11 due to the rotation around the axis.

When viewed in the axial direction of the grip 11 (the z direction), the holding member 271 (the sensor device 205 or the end face 11a of the grip 11) in the present embodiment is shaped in such a manner that the dimension in the longitudinal direction is greater than the dimension in the short-side direction orthogonal to the longitudinal direction. The first direction (in which the sensor-side coupling part 215 shifts so as to be attached to and detached from the grip-side coupling part 213) is the short-side direction.

The ease of ensuring that an adequate amount of space is left for the electronic components 41 is greater in this case than in the case in which the first direction is the longitudinal direction (as in the first embodiment). The sensor device 205 can readily achieve miniaturization and/or greater versatility accordingly.

The holding member 271 in the present embodiment includes: the first base 277 including the sensor-side coupling part 215; and the second base 279 capable of being attached to and detached from the first base 277. One of the first base 277 and the second base 279 is provided with an inertial sensor. In the present embodiment, the first base 277 is provided with an inertial sensor. The other of the first base 277 and the second base 279 includes the battery holder portion 45 for holding a battery. In the present embodiment, the second base 279 includes the battery holder portion 45.

Together with the second base 279, the battery 43 in the present embodiment can be removed from the first base 277, as mentioned above. In this case, the terminals 295 provided to the second base 279 can be used to recharge the battery 43. This provides greater design flexibility for a battery recharger. Different kinds of batteries 43 may be held by the respective kinds of second bases 279 that can be attached to and detached from the first base 277 of one kind. This approach enables part of the sensor device 205 (the first component piece 273) to gain adaptability to a wide variety of applications and is thus expected to translate to productivity gains. In the case where the battery holder portion 45 is included in the second base 279 as in the present embodiment, the battery 43 (the second base 279) can be installed or removed in a state in which the first base 277 is fitted to the grip 11.

The second base 279 in the present embodiment may be attached to or detached from the first base 277 by being moved relative to the first base 277 in the second direction. The second direction is different from the first direction that is the direction of movement for attaching the first base 277 to the grip 11 and movement for detaching the first base 277 from the grip 11.

As mentioned above, this is advantageous in that the first base 277 is less likely to be accidentally detached from the grip 11 while the second base 279 is detached from the first base 277, and vice versa. Likewise, the first base 277 is less likely to be accidentally detached from the grip 11 while the second base 279 is attached to the first base 277.

In some embodiments, the second direction coincides with the first direction, where the movement for attaching the first base 277 to the grip 11 may be opposite in direction to the movement for attaching the second base 279 to the first base 277.

This is advantageous in that the first base 277 is less likely to be accidentally detached from the grip 11 while the second base 279 is detached from the first base 277, and vice versa, as in the aforementioned case in which the first direction and the second direction are mutually different. Although the direction of the movement for attachment and detachment may be the longitudinal direction or the short-side direction, the merits of either approach will be increased when both the first direction and the second direction coincide with the longitudinal direction or when both the first direction and the second direction coincide with the short-side direction.

The other of the first base 277 and the second base 279 or, more specifically, the second base 279 in the present embodiment is provided with a first terminal (the terminals 295) for connection to the outside. In a state in which the second base 279 is detached from the first base 277, the battery held in the battery holder portion 45 is rechargeable via the first terminal connected to the outside. The one of the first base 277 and the second base 279 or, more specifically, the first base 277 in the present embodiment is provided with a second terminal (the terminals 297) for connection to the terminals 295. In a state in which the second base 279 is attached to the first base 277, the battery held in the battery holder portion 45 is capable of supplying power to the at least one inertial sensor (the angular velocity sensor 53 and/or the acceleration sensor 55) via the second terminal connected to the terminals 295.

That is, the terminals 295 are used to recharge the battery and to supply power to the at least one inertial sensor. This helps simplify the configuration of the sensor device 205. Simplifying the configuration relevant to the terminals provides ease of ensuring that the sensor device 205 achieves miniaturization and/or has an adequate mounting area for the electronic components 41.

### Third Embodiment

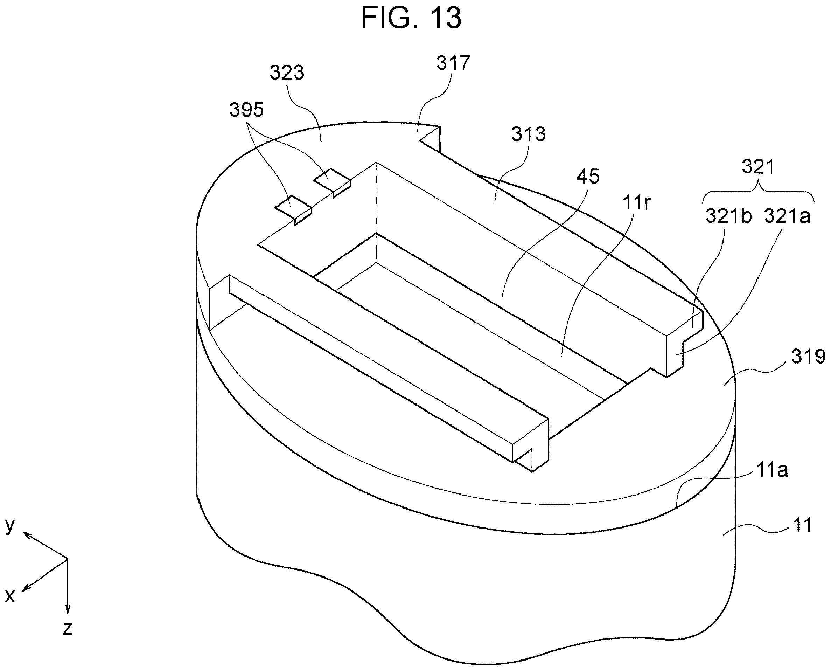

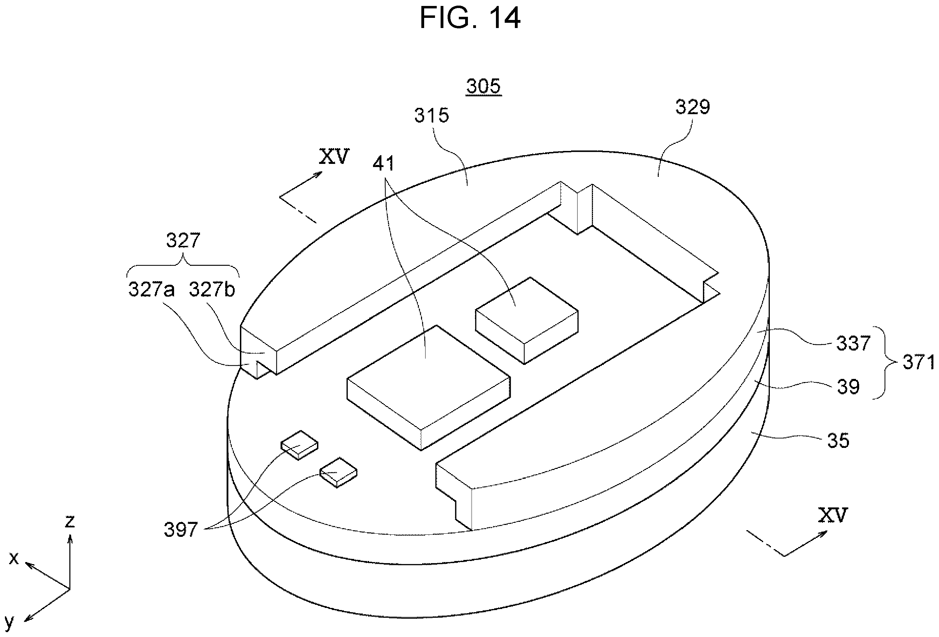

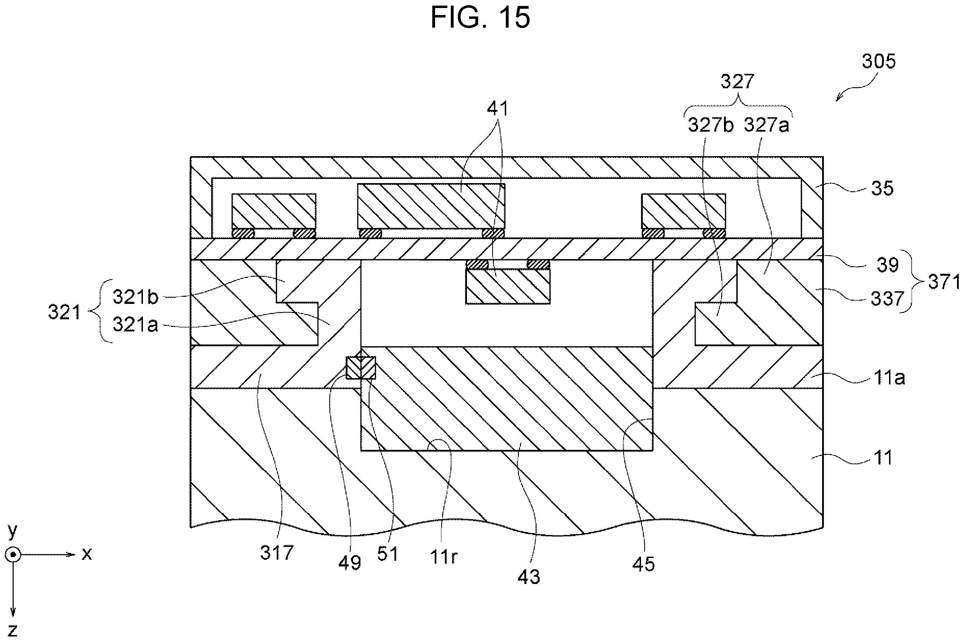

Fig. 13, which is analogous to Fig. 2 relevant to the first embodiment, is a perspective view of the grip 11 adapted to a sensor device (denoted by 305 in Figs. 14 and 15) according to a third embodiment, illustrating a state in which the grip 11 without the sensor device attached thereto is viewed from the (-z) side on which a mounting place for the sensor device 305 is located. Fig. 14, which is analogous to Fig. 3 relevant to the first embodiment, is a perspective view of the sensor device 305, illustrating a state in which the sensor device 305 is viewed from the (+z) side on which the grip 11 is located. Fig. 15 is a sectional view of the sensor device 305 taken along line XV-XV in Fig. 14.

The battery 43 in the first embodiment has been described above as an element that, together with the sensor device 5, is attached to and detached from the grip 11. The battery 43 in the present embodiment is designed to be attached to and detached from the grip 11 independently of the sensor device 305. When seen from another perspective, the battery holder portion 45 for holding the battery 43 is included in the grip 11, not in the sensor device 305. The sensor device 305 in the present embodiment will be described below as a device in which neither a member (e.g., a grip-side member 317) for fixation to the grip 11 nor the battery 43 is included. As described above in relation to the first embodiment, the sensor device is definable as a device including the member and/or the battery 43.

The discussion of the aforementioned difference will be preceded by a brief description of the mechanism by which the sensor device 305 is attached to and detached from the grip 11. The mechanism by which the sensor device is attached and detached may be essentially analogous to the mechanism in the first embodiment or the mechanism in the second embodiment. For example, a grip-side coupling part 313 (the grip-side member 317) is provided on the end face 11a of the grip 11. The sensor device 305 includes a sensor-side coupling part 315. The sensor device 305 and the grip 11 are moved relative to each other in a direction that forms an angle with the axial direction of the grip 11 such that these coupling parts are attached to each other or are detached from each other.

The specific design for attachment and detachment may be analogous to the corresponding design in the first embodiment. The grip-side coupling part 313 includes the basal portion 319, a pair of rails 321, and a terminal end portion 323. The rails 321 extend in parallel on the basal portion 319. The terminal end portion 323 is on the side on which one end of each rail 321 is located. The rails 321 each include a wall portion 321a and a protruding portion 321b. The wall portion 321a extends upward from the basal portion 319. The protruding portion 321b protrudes from the wall portion 321a. The sensor-side coupling part 315 includes a pair of rails 327 and a terminal end portion 329. The rails 327 extend in parallel on the sensor substrate 39. The terminal end portion 329 is on the side on which one end of each rail 327 is located. The rails 327 each include a wall portion 327a and a protruding portion 327b. The wall portion 327a extends upward from the sensor substrate 39. The protruding portion 327b protrudes from the wall portion 327a. Each of the rails 321 and the corresponding one of the rails 327 become engaged or disengaged such that the grip-side coupling part 313 and the sensor-side coupling part 315 are attached to each other or detached from each other.

As in the previous embodiment, a member that holds at least one inertial sensor (the electronic component 41) and is designed to be attached to and detached from the grip 11 is regarded as a holding member. The holding member in the present embodiment is denoted by 371. The holding member 371 includes mainly the sensor substrate 39 and a holding base 337. The holding base 337 is a member that includes the sensor-side coupling part 315.

As mentioned above in relation to the first embodiment, the pair of rails 321 of the grip-side coupling part 313 may be located on the inner side with respect to the pair of rails 327 of the sensor-side coupling part 315, or the pair of rails 327 of the sensor-side coupling part 315 may be located on the inner side with respect to the pair of rails 321 of the grip-side coupling part 313. The positional relationship between two pairs of rails in the illustrated example is the converse of the positional relationship between two pairs of rails in the first embodiment; that is, the pair of rails 321 is located between the two rails 327. As in the first embodiment, the engagement portion 31 and the engagement target portion 33 (not illustrated) each may be provided in any desired part. As in the modification of the first embodiment, the basal portion 319 may be eliminated. The illustrated example differs from the first embodiment in that the member including the sensor-side coupling part 315 is fixed directly to the sensor substrate 39 without the basal portion 25 and the spacers 47 disposed between the member and the sensor substrate 39. Alternatively, the member may include the basal portion 25 and the spacers 47 as in the first embodiment.

For example, the battery holder portion 45 is a recess that is a combination of a cavity (bearing no reference sign) extending through the grip-side member 317 and a recess 11r, which is provided in the end face 11a of the grip 11. Although the bottom surface or the entire inner surface of the recess 11r may be regarded as part of the end face 11a, the surface concerned and the end face 11a will be treated separately in the following description. Referring to Fig. 15, the thickness of the battery 43 is greater than the depth of the recess 11r such that the battery 43 is located in both the recess 11r and the cavity provided in the basal portion 319. Alternatively, the thickness of the battery 43 may be less than or equal to the depth of the recess 11r provided in the end face 11a such that the battery 43 is entirely accommodated in the recess 11r. In some embodiments (not illustrated), the battery holder portion 45 is a recess provided in the grip-side member 317, in which case the recess 11r is not provided in the end face 11a. As in the modification of the first embodiment (see Fig. 7), the basal portion 319 may be eliminated, where it is not required that part of the battery holder portion 45 be included in the grip-side member 317; that is, the entirety of the battery holder portion 45 may be the recess 11r provided in the end face 11a.

The battery 43 may be electrically connected to the sensor substrate 39 by any desired means. In the illustrated example, the grip-side member 317 is provided with the terminals 49 (see Fig. 15) for connection with the terminals 51 of the battery 43. The grip-side member 317 is also provided with terminals 395 (see Fig. 13). The terminals 49 are connected to the terminals 395 with interconnections (not illustrated) therebetween. In a state in which the sensor device 305 is attached to the grip 11, the terminals 395 are in contact with terminals 397, which are provided to the sensor substrate 39 (see Fig. 14). The terminals 395 are connected to the terminals 397 accordingly. In some embodiments (not illustrated), the terminals 51 of the battery 43 are in direct contact with the terminals provided to the sensor substrate 39.

As mentioned above, the sensor-side coupling part 315 in the present embodiment is included in the holding member 371, which holds at least one inertial sensor (the angular velocity sensor 53 and/or the acceleration sensor 55). The sensor-side coupling part 315 is moved relative to the grip 11 in the first direction (the y direction) that forms an angle with the axial direction of the grip 11 such that the sensor-side coupling part 315 is attached to and detached from the grip-side coupling part 313 on the end face 11a of the grip 11. This feature produces effects equivalent to those produced in the first embodiment. For example, this feature reduces the possibility that the sensor device 305 will be misaligned with respect to the grip 11 due to the rotation around the axis.

The holding member 371 in the present embodiment is designed as follows: the battery 43 is hidden from view by the holding member 371 in a state in which the sensor-side coupling part 315 is attached to the grip-side coupling part 313; and the battery 43 is exposed to view in a state in which the sensor-side coupling part 315 is detached from the grip-side coupling part 313. As in the first embodiment, the mechanism by which the sensor device 305 is attached to and detached from the grip 11 can double as the mechanism by which the battery 43 is hidden from view.

The present embodiment also have the following features. In a state in which the sensor-side coupling part 315 is attached to the grip-side coupling part 313, at least part of the battery 43 located between the holding member 371 and the grip 11 is accommodated in the recess 11r that defines an opening in the end face 11a of the grip 11. At least part of the battery 43 is in contact with the inner surface of the recess 11r. These features provide ease of reducing the profile of the sensor device 305 or, more specifically, the distance between the end face 11a and an end portion on the -z side of the sensor device 305. This is applicable to another modification (not illustrated) of the first embodiment, where at least part of the grip-side coupling part 13 is built in the grip 11 such that at least part of the battery 43 is located in the grip 11.

### Modifications of Rails

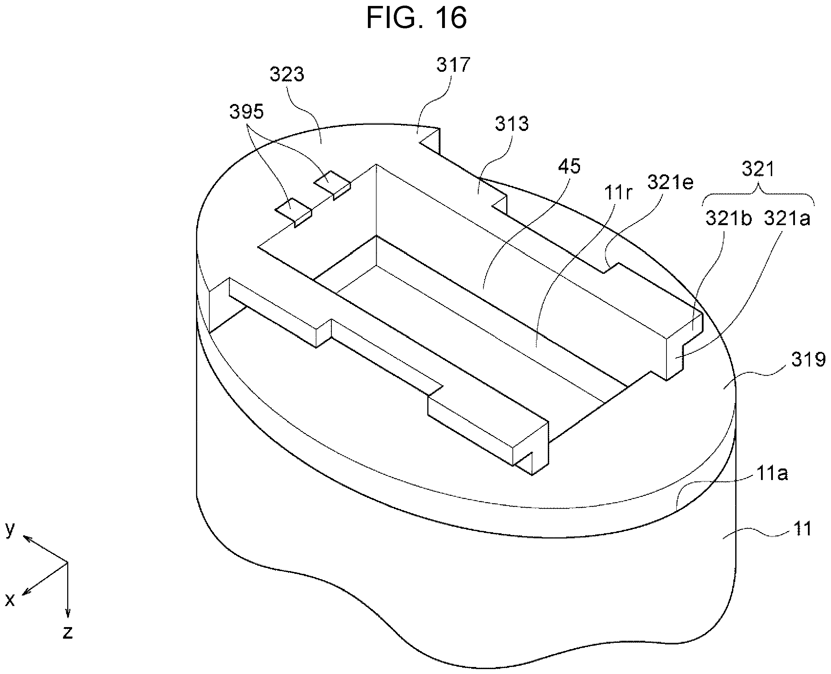

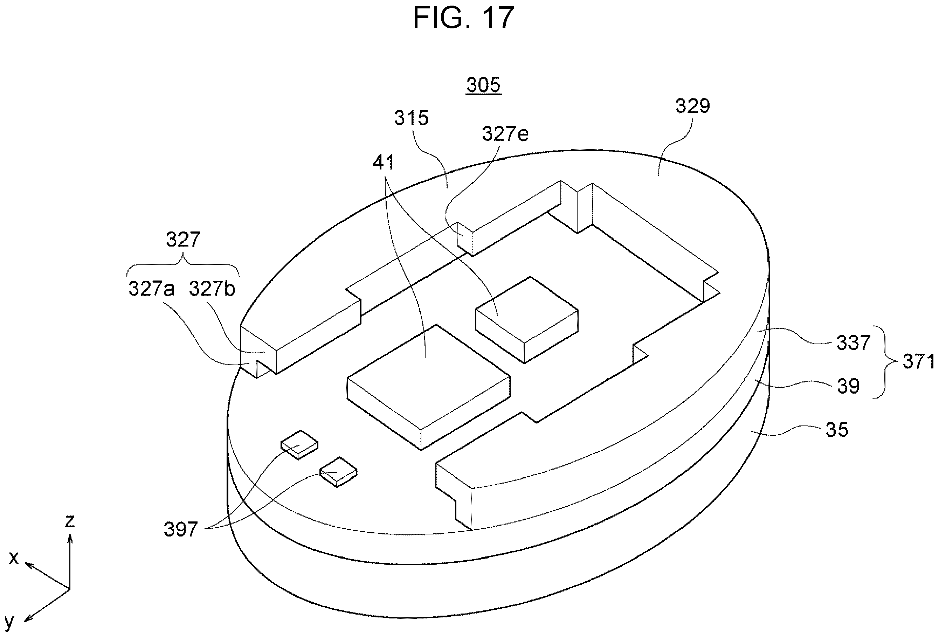

Figs. 16 and 17 are provided for explanation of modifications of the rails and are analogous to Figs. 13 and 14, respectively. The following describes a case in which the modifications of the rails are adopted to the third embodiment. The modifications may also be adopted to the first and second embodiments.

The protruding portions 321b of the rails 321 of the grip-side coupling part 313 each include a cutout 321e. Likewise, the protruding portions 327b of the rails 327 of the sensor-side coupling part 315 each include a cutout 327e. Each cutout 321e is sized such that a portion being part of the protruding portion 327b and being located on the +y side relative to the cutout 327e (i.e., located opposite the end portion 329) can pass through the cutout 321e in the z direction, that is, in the axial direction of the grip 11. Likewise, each cutout 327e is sized such that a portion being part of the protruding portion 321b and being located on the -y side relative to the cutout 321e (i.e., located opposite the end portion 323) can pass through the cutout 327e in the z direction.

In this case, the sensor device 305 can be attached to the grip 11 in the following manner: part of each protruding portion passes through the corresponding cutout in the z direction, and the rails are slid in a direction that forms an angle with the grip 11. Another advantage is that the amount of sliding required of the sensor device 305 is reduced.

In another modification (not illustrated), each rail may include two or more cutouts. As can be understood by analogy to the modification, coupling parts that can hardly be regarded as rails may be provided. For example, L-shaped columns may be arranged in the direction in which the sensor device is slid.

The technique disclosed herein is not limited to the embodiment described above and the modifications thereof may be implemented in various forms.

What is intended herein as a hitting implement is not limited to a racket. For example, the hitting implement may be a baseball bat, a golf club, or an ice hockey stick. What is intended herein as a sports implement is not limited to an implement for hitting a ball or the like. For example, the sport implement may be a lacrosse stick. What is intended herein as a sports implement is not limited to an implement for a ball game. For example, the sports implement may be ski poles. That is, the sports implement referred to herein may be interpreted as a wide variety of sports implements each including a rodlike grip.

The technique disclosed herein is applicable not only to analysis of training for sports matches but also to arcade game machines for simulation matches.

Various concepts can be derived from the present disclosure, where it is not required that the sensor device and the grip be attached to each other and be detached from each other by being moved relative to each other in a direction that forms an angle with the axial direction of the grip.

For example, the following concept is derived from the first and third embodiments.

### Concept 1

A sensor device and a sports implement provided with the sensor device, where the sensor device includes an inertial sensor and a holding member. The holding member holds the inertial sensor and is capable of being attached to and detached from an end face of a grip being part of the sports implement and having the shape of a shaft. The battery is hidden from view by the holding member in a state in which the holding member is attached to the grip. The battery is exposed to view in a state in which the holding member is detached from the grip.

The following concept is derived from the first embodiment.

### Concept 2

A sensor device and a sports implement provided with the sensor device, where the sensor device includes an inertial sensor and a holding member. The holding member holds the inertial sensor and is capable of being attached to and detached from an end face of a grip being part of a sports implement and having the shape of a shaft. The holding member includes a sensor substrate and a holding base. The inertial sensor is mounted on the sensor substrate. The holding base includes a battery holder portion for holding a battery and is joined to the sensor substrate. In a state in which the holding member is attached to the grip, the battery held in the battery holder portion is located between the holding base and the end face of the grip in a manner so as to be incapable of being removed or being replaced with another. In a state in which the holding member is detached from the grip, the battery held in the battery holder portion is exposed to view in a manner so as to be capable of being removed or replaced with another.

The following concept is derived from the second embodiment.

### Concept 3

A sensor device and a sports implement provided with the sensor device, where the sensor device includes an inertial sensor and a holding member. The holding member holds the inertial sensor and is capable of being attached to and detached from an end face of a grip being part of a sports implement and having the shape of a shaft. The holding member includes a first base and a second base. The first base is capable of being attached to and detached from the end face of the grip. The second base is capable of being attached to and detached from the first base. One of the first base and the second base is provided with the inertial sensor. The other of the first base and the second base includes a battery holder portion for holding a battery.

In relation to the second embodiment, in which the second component piece is attached to and detached from the first component piece by being moved relative to the first component piece in a direction that forms an angle with the axial direction of the grip, various other means by which the second component piece is attached to and detached from the first component piece have been described above. The means may be adopted into Concepts 1 to 3 such that the holding member is capable of being attached to and detached from the grip by any of the means.

### Reference Signs List

1 analysis system (analysis system designed for rackets)
3 racket (sports implement)
5, 5-1, 205, 305 sensor device
9 hitting part
9a hitting surface
11 grip
11a end face
11r recess
13, 13-1, 213, 313 grip-side coupling part
15, 215, 315 sensor-side coupling part
37 holding base
39 sensor substrate
41 electronic component (inertial sensor)
43 battery
45 battery holder portion
53 angular velocity sensor (inertial sensor)
55 acceleration sensor (inertial sensor)
65, 67, 69 communication unit
277 first base
279 second base

## Claims

1. A sensor device, comprising:
an inertial sensor; and
a holding member that holds the inertial sensor and is capable of being attached to and detached from an end face of a grip of a sports implement that has a shape of a shaft, wherein the holding member includes a sensor-side coupling part that is capable of being attached to and detached from a grip-side coupling part on the end face of the grip by being moved relative to the grip in a first direction that forms an angle with an axial direction of the grip.

2. The sensor device according to Claim 1, wherein
when viewed in the axial direction, a dimension of the holding member in a longitudinal direction is greater than a dimension of the holding member in a short-side direction orthogonal to the longitudinal direction, and
the first direction is the longitudinal direction.

3. The sensor device according to Claim 1, wherein
when viewed in the axial direction, a dimension of the holding member in a longitudinal direction is greater than a dimension of the holding member in a short-side direction orthogonal to the longitudinal direction, and
the first direction is the short-side direction.

4. The sensor device according to any one of Claims 1 to 3, further comprising a wired communication unit that is held by the holding member and is configured to conduct wired communication to communicate with an external device.

5. The sensor device according to Claim 4, further comprising a connector to conduct the wired communication, the connector being held by the holding member and being connected to the wired communication unit, wherein
the connector is hidden from view by the holding member in an attached state in which the sensor-side coupling part is attached to the grip-side coupling part, and
the connector is exposed to view in a detached state in which the sensor-side coupling part is detached from the grip-side coupling part.

6. The sensor device according to Claim 4 or 5, further comprising a wireless communication unit that is held by the holding member and is configured to conduct wireless communication to communicate with an external device.

7. The sensor device according to any one of Claims 1 to 6, wherein
a battery is hidden from view by the holding member in an attached state in which the sensor-side coupling part is attached to the grip-side coupling part, and
the battery is exposed to view in a detached state in which the sensor-side coupling part is detached from the grip-side coupling part.

8. The sensor device according to any one of Claims 1 to 7, wherein a battery located between the holding member and the grip is in contact with the end face of the grip in an attached state in which the sensor-side coupling part is attached to the grip-side coupling part.

9. The sensor device according to any one of Claims 1 to 7, wherein in an attached state in which the sensor-side coupling part is attached to the grip-side coupling part, at least part of a battery located between the holding member and the grip is accommodated in a recess defining an opening in the end face of the grip and is in contact with an inner surface of the recess.

10. The sensor device according to any one of Claims 1 to 6, wherein
the holding member includes
a sensor substrate on which the inertial sensor is mounted, and
a holding base that is joined to the sensor substrate and that includes a battery holder portion for holding a battery, wherein
in an attached state in which the holding member is attached to the grip, the battery held in the battery holder portion is located between the holding base and the end face of the grip, and is incapable of being removed or being replaced with another battery, and
in a detached state in which the holding member is detached from the grip, the battery held in the battery holder portion is exposed to view, and is capable of being removed or replaced with another.

11. The sensor device according to any one of Claims 1 to 6, wherein
the holding member includes
a first base including the sensor-side coupling part, and
a second base configured to be attached to and detached from the first base,
one of the first base and the second base is provided with the inertial sensor, and
the other of the first base and the second base includes a battery holder portion for holding a battery.

12. The sensor device according to Claim 11, wherein
the second base is capable of being attached to and detached from the first base by being moved relative to the first base in a second direction, and
the second direction is different from the first direction.

13. The sensor device according to Claim 11, wherein
the second base is capable of being attached to and detached from the first base by being moved relative to the first base in a second direction,
the second direction coincides with the first direction, and
movement for attaching the first base to the grip is opposite in direction to movement for attaching the second base to the first base.

14. The sensor device according to any one of Claims 11 to 13, wherein
the other of the first base and the second base is provided with a first terminal for connection to an outside, in a detached state in which the second base is detached from the first base, the battery held in the battery holder portion is rechargeable via the first terminal connected to the outside,
the one of the first base and the second base is provided with a second terminal for connection to the first terminal, and
in an attached state in which the second base is attached to the first base, the battery held in the battery holder portion is capable of supplying power to the inertial sensor via the second terminal connected to the first terminal.

15. A sports implement, comprising:
a grip having a shape of a shaft;
a grip-side coupling part on an end face of the grip; and
a sensor device capable of being attached to and detached from the grip-side coupling part, wherein
the sensor device includes an inertial sensor and a holding member holding the inertial sensor, and is located on an end face of the grip, and
the holding member includes a sensor-side coupling part that is capable of being attached to and detached from the grip-side coupling part by being moved relative to the grip in a first direction that forms an angle with an axial direction of the grip.
